# EUROPEAN PATENT SPECIFICATION

(11) **EP 3 567 772 B1**
(45) Date of publication and mention of the grant of the patent: **25.11.2020**
(21) Application number: 17894249.6
(22) Date of filing: 25.01.2017
(51) Int. Cl.: H04L 1/18, H04L 5/00, H04W 72/04, H04L 1/16

(54) **METHOD FOR SENDING AND DETECTING CONTROL INFORMATION, TERMINAL DEVICE, AND NETWORK DEVICE**
VERFAHREN ZUM SENDEN UND ZUR DETEKTION VON STEUERUNGSINFORMATIONEN, ENDGERÄTEVORRICHTUNG UND NETZWERKVORRICHTUNG
PROCÉDÉ D'ENVOI ET DE DÉTECTION D'INFORMATIONS DE COMMANDE, DISPOSITIF TERMINAL ET DISPOSITIF DE RÉSEAU

(43) Date of publication of application: 13.11.2019
(73) Proprietor: Huawei Technologies Co., Ltd., Longgang District Shenzhen, Guangdong 518129 (CN)
(72) Inventor: SHAO, Jiafeng, Shenzhen Guangdong 518129 (CN); LI, Chaojun, Shenzhen Guangdong 518129 (CN)
(74) Representative: Isarpatent
(86) International application number: PCT/CN2017/072707
(87) International publication number: WO 2018/137221

(56) References cited:
- EP-A1- 2 592 776
- WO-A1-2016/040290
- WO-A1-2016/144243
- CN-A- 102 119 493
- CN-A- 104 539 396
- CN-A- 105 721 118
- PANASONIC: "UL simultaneous transmission between sTTI and TTI", 3GPP DRAFT; R1-1612108, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20161114 - 20161118 4 November 2016 (2016-11-04), XP051189180, Retrieved from the Internet: URL:http://www.3gpp.org/ftp/tsg_ran/WG1_RL 1/TSGR1_87/Docs/ [retrieved on 2016-11-04]

## Description

### TECHNICAL FIELD

Embodiments of the present invention relate to the communications field, and in particular, to a method for sending control information and to a communication apparatus.

### BACKGROUND

In a long term evolution (long term evolution, LTE) system, a transmission time interval (transmission time interval, TTI) of each of a physical uplink control channel (physical uplink control channel, PUCCH) and a physical uplink shared channel (physical uplink shared channel, PUSCH) is 1 ms. The PUCCH is used to carry uplink control information (uplink control information, UCI). The UCI may include at least one of channel state information (channel state information, CSI), a hybrid automatic repeat request-acknowledgement (hybrid automatic repeat request-acknowledgement, HARQ-ACK) message, and a scheduling request (scheduling request, SR). The HARQ-ACK message indicates a receiving status of downlink data. PUCCH formats (format) include a plurality of PUCCH formats such as 1/1a/1b/3/4/5. For the PUCCH format 1/1a/1b/3, to effectively use a resource, a plurality of terminal devices in a same cell may send respective PUCCHs on a same resource block (resource block, RB). A plurality of PUCCHs on a same RB may be implemented through orthogonal code division multiplexing (orthogonal code division multiplexing, CDM): A cyclic shift (cyclic shift) is used in frequency domain, or an orthogonal sequence (orthogonal sequence) is used in time domain, or a cyclic shift is used in frequency domain and an orthogonal sequence is used in time domain. The cyclic shift is also referred to as phase rotation (phase rotation). Different CDM technologies may be used for different PUCCH formats, as shown in Table 1.

**Table 1**

| PUCCH format | CDM |
|---|---|
| 1/1a/1b | CDM in frequency domain + CDM in time domain |
| 3/5 | CDM in time domain |
| 4 | No CDM, where one user occupies a plurality of RBs |

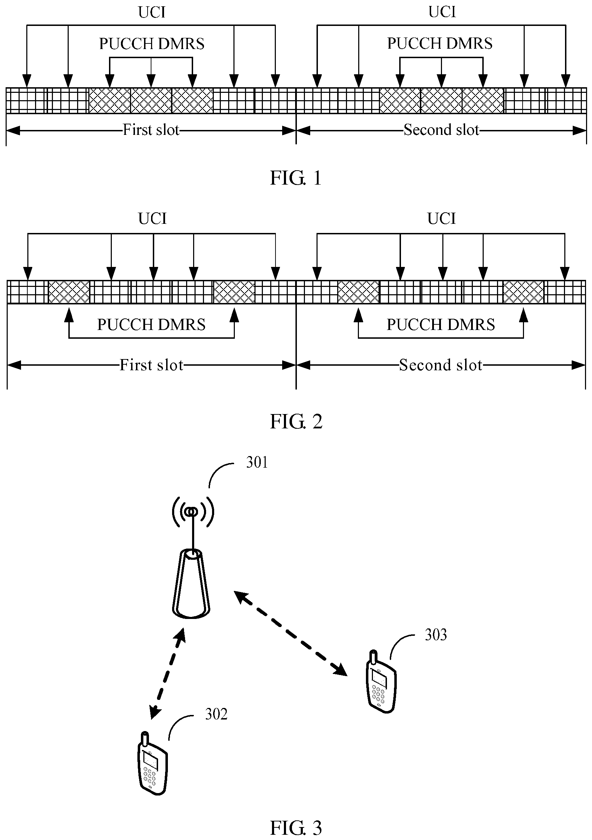

For the PUCCH format 1/1a/1b, as shown in FIG. 1, three symbols in the middle of each slot are used to transmit a demodulation reference signal for a PUCCH (demodulation reference signal for PUCCH, PUCCH DMRS), and four remaining symbols are used to transmit uplink control information (uplink control information, UCI). To implement time domain orthogonality, that is, to implement CDM in time domain, the four symbols used to transmit UCI in each slot are multiplied by a length-4 orthogonal sequence, and the three symbols used to transmit a PUCCH DMRS in each slot are multiplied by a length-3 orthogonal sequence. For the PUCCH format 3, as shown in FIG. 2, a second symbol and a sixth symbol in each slot are used to transmit a PUCCH DMRS, and five remaining symbols are used to transmit UCI. To implement time domain orthogonality, the five symbols used to transmit UCI in each slot are multiplied by a length-5 orthogonal sequence. It should be noted that, when a last symbol in a first subframe is used to transmit a sounding reference signal (sounding reference signal, SRS), for the PUCCH format 1/1a/1b, only three symbols used to transmit UCI in a second slot are multiplied by a length-3 orthogonal sequence, and for the PUCCH format 3, only four symbols used to transmit UCI in a second slot are multiplied by a length-4 orthogonal sequence.

In the long term evolution (long term evolution, LTE) system, a resource for the SR is preconfigured by using higher layer signaling.

When sending the SR and the HARQ-ACK message (carried on a PUCCH format 1a or 1b) in a same subframe, UE sends the HARQ-ACK message on the resource on which the SR is located, and after receiving the HARQ-ACK message, a network device knows that the terminal device sends the SR and the HARQ-ACK message at the same time. Alternatively, when sending only the SR, the terminal device sends a NACK (representing the scheduling request SR) on the resource for the SR. Alternatively, when sending only the HARQ-ACK message, the terminal device sends the HARQ-ACK message on a resource for the HARQ-ACK message depending on whether data is correctly demodulated. When sending the SR and the HARQ-ACK message (carried on a PUCCH 3, 4, or 5) in a same subframe, the UE sends the SR on a resource for the HARQ-ACK message.

In a wireless communications system, a latency (latency) is one of important factors affecting user experience. A transmission mechanism based on a transmission time interval of 1 ms cannot meet a low-latency service requirement. To reduce a latency, a TTI length of each of the PUSCH and the PUCCH needs to be shortened from one-subframe duration to one-slot duration or even one-symbol duration. A PUSCH with a shortened TTI length may be referred to as a short PUSCH (short PUSCH, sPUSCH), and a PUCCH with a shortened TTI length may be referred to as a short PUCCH (short PUCCH, sPUCCH).

It can be learned from the foregoing description that, in a transmission process in which a TTI is shortened, a length of an uplink TTI may be dynamically changed. When a TTI length is shortened, a combination of one or more of a PUCCH, a PUSCH, an sPUCCH, and an sPUSCH exists. In this case, how to send an SR and a HARQ-ACK message is an urgent problem to be resolved.

WO 2016/040290 A1 discloses devices and techniques for determining a transmission time interval (TTI) duration and/or varying the TTI duration.

Document "UL simultaneous transmission between sTTI and TTI" from the company Panasonic discusses UL aspect of shortened TTI.

### SUMMARY

The present invention provides a method for sending control information according to claim 1, a communication apparatus according to claim 10, and a computer-readable storage medium according to claim 11, to increase efficiency of sending an SR and a HARQ-ACK message when a length of an uplink TTI is variable, and prevent an uplink single-carrier characteristic from being damaged, so that important information can be correctly transmitted while costs of a terminal device are reduced. Further advantageous embodiments and improvements of the present invention are listed in the dependent claims. Hereinafter, before coming to a detailed description of the embodiments of the present invention with reference to the attached drawings, some aspects of the invention which contribute to the understanding of the invention are listed separately. However, it should be noted that the invention is defined by the attached claims, and any examples and embodiments not covered by these claims are also to be understood as aspects contributing to the understanding of the invention.

According to a first aspect, an embodiment of the present invention provides a method for sending control information. A terminal device determines, based on a relationship between a first time length and a second time length, an uplink control channel for carrying control information. The uplink control channel for carrying control information is a first uplink control channel or a second uplink control channel, the first time length is a time length corresponding to the first uplink control channel, the second time length is a time length corresponding to the second uplink control channel, the first uplink control channel is used to carry a HARQ-ACK message, and the second uplink control channel is used to carry an SR. The terminal device sends at least the HARQ-ACK message on the uplink control channel for carrying control information.

In this embodiment of the present invention, according to the technical solutions provided in this application, not only an uplink single-carrier characteristic can be maintained, but also the HARQ-ACK message can be first transmitted. The terminal device determines, by determining the relationship between the first time length corresponding to the first uplink control channel and the second time length corresponding to the second uplink control channel, for example, determining whether the first time length is equal to or the same as the second time length, to send the uplink control channel for carrying control information. When the first time length is the same as the second time length, the terminal device selects a resource corresponding to the second uplink control channel to send the HARQ-ACK message and the SR; or when the first time length is different from the second time length, the terminal device selects a resource corresponding to the first uplink control channel to send the HARQ-ACK message. Therefore, the terminal device is prevented from sending two channels with different TTI lengths, and the uplink single-carrier characteristic is prevented from being damaged, so that important information can be correctly transmitted while costs of the terminal device are reduced.

In a possible implementation, when the first time length is equal to the second time length, the terminal device determines that the uplink control channel for carrying control information is the second uplink control channel. According to this solution, when the first time length is the same as the second time length, the terminal device selects a resource corresponding to the second uplink control channel to send the HARQ-ACK message and the SR. Using the second uplink control channel is equivalent to implicitly notifying a network device that the terminal device sends the SR. In this case, because the two time lengths are the same, the terminal device sends both the HARQ-ACK message and the SR on a same channel, thereby ensuring timely transmission of the HARQ-ACK message and the SR without damaging an uplink single-carrier characteristic.

In a possible implementation, the terminal device sends the HARQ-ACK message and the SR on the uplink control channel for carrying control information. The uplink control channel for carrying control information is the second uplink control channel.

Optionally, the terminal device determines, based on a case in which the first time length is the same as the second time length, that the uplink control channel for carrying control information is the second uplink control channel.

Optionally, the terminal device determines, based on a case in which the first time length is less than or equal to the second time length, that the uplink control channel for carrying control information is the second uplink control channel.

According to this solution, the terminal device selects a resource corresponding to the second uplink control channel to send the HARQ-ACK message and the SR. Using the second uplink control channel is equivalent to implicitly notifying a network device that the terminal device sends the SR. In this case, because the two time lengths are the same or the first time length is less than or equal to the second time length, the terminal device sends both the HARQ-ACK message and the SR on a same channel, thereby ensuring timely transmission of the HARQ-ACK message and the SR without damaging an uplink single-carrier characteristic. It may be understood that it is an optimal solution that the two time lengths are the same. If the first time length is less than or equal to the second time length, sending the HARQ-ACK message on the second uplink control channel increases a transmission latency of the HARQ-ACK message.

In a possible implementation, when the first time length is unequal to the second time length, the terminal device determines that the uplink control channel for carrying control information is the first uplink control channel. According to this solution, when the first time length is different from the second time length, the terminal device selects a resource corresponding to the first uplink control channel to send the HARQ-ACK message instead of using a resource corresponding to the second uplink control channel, thereby avoiding a disadvantage of increasing a transmission latency of the HARQ-ACK message, and ensuring timely transmission of the HARQ-ACK message without damaging an uplink single-carrier characteristic.

In a possible implementation, the terminal device sends the HARQ-ACK message on the uplink control channel for carrying control information. The uplink control channel for carrying control information is the first uplink control channel.

Optionally, the terminal device determines, based on a case in which the first time length is different from the second time length, that the uplink control channel for carrying control information is the first uplink control channel.

Optionally, the terminal device determines, based on a case in which the first time length is less than or greater than the second time length, that the uplink control channel for carrying control information is the first uplink control channel.

According to this solution, the terminal device selects a resource corresponding to the first uplink control channel to send the HARQ-ACK message instead of using a resource corresponding to the second uplink control channel, thereby avoiding a disadvantage of increasing a transmission latency of the HARQ-ACK message when the first time length is less than the second time length, avoiding a disadvantage of reducing accuracy of the HARQ-ACK message on the second uplink control channel when the first time length is greater than the second time length, and ensuring timely and accurate transmission of the HARQ-ACK message without damaging an uplink single-carrier characteristic.

In a possible implementation, the terminal device discards the SR, where the uplink control channel for carrying control information is the first uplink control channel; or the terminal device discards the SR, where the first time length is unequal to the second time length. According to this solution, the terminal device chooses to discard the SR, and the terminal device selects a resource corresponding to the first uplink control channel to send the HARQ-ACK message instead of using a resource corresponding to the second uplink control channel, so that the following cases are avoided. Case 1: An uplink single-carrier characteristic is damaged when two uplink channels are sent. Case 2: A transmission latency of the HARQ-ACK message is increased when the first time length is less than the second time length. Case 3: Accuracy of the HARQ-ACK message on the second uplink control channel is reduced when the first time length is greater than the second time length. In this way, timely and accurate transmission of the HARQ-ACK message can be ensured.

In a possible implementation, a service priority corresponding to the HARQ-ACK message is higher than or equal to a service priority corresponding to the SR, or a latency requirement of a downlink data service corresponding to the HARQ-ACK message is higher than or equal to a latency requirement of an uplink data service corresponding to the SR.

Optionally, if the service priority corresponding to the HARQ-ACK message is lower than the service priority corresponding to the SR, or the latency requirement of the downlink data service corresponding to the HARQ-ACK message is lower than the latency requirement of the uplink data service corresponding to the SR, the terminal device determines, based on the relationship between the first time length and the second time length, the uplink control channel for carrying control information, and the terminal sends at least the SR on the uplink control channel for carrying control information.

Optionally, the terminal device determines the service priority corresponding to the HARQ-ACK message or the latency requirement of the downlink data service corresponding to the HARQ-ACK message.

Optionally, the terminal device determines the service priority corresponding to the SR or a latency requirement of a downlink data service corresponding to the SR.

According to this solution, the terminal device may determine a priority relationship between the HARQ-ACK message and the SR, and the first time length is unequal to the second time length, so that more important information can be sent while an uplink single-carrier characteristic is prevented from being damaged.

In a possible implementation, before the determining, by a terminal device, an uplink control channel for carrying control information, the method further includes: determining, by the terminal device, a format of the first uplink control channel; and/or determining, by the terminal device, a format of the second uplink control channel.

Optionally, when the terminal device determines that the format of the first uplink control channel is la, 1b, or 2, the terminal device determines, based on the relationship between the first time length and the second time length, the uplink control channel for carrying control information. When the terminal device determines that the format of the first uplink control channel is 3, 4, or 5, the terminal device directly determines that the uplink control channel for carrying control information is the first uplink control channel. For example, 1a is an sPUCCH format 1a, 1b is an sPUCCH format 1b, 2 is an sPUCCH format 2, 3 is an sPUCCH format 3, 4 is an sPUCCH format 4, and 5 is an sPUCCH format 5.

Optionally, when the terminal device determines that the format of the first uplink control channel is 1a or 1b, the terminal device determines, based on the relationship between the first time length and the second time length, the uplink control channel for carrying control information. When the terminal device determines that the format of the first uplink control channel is 3, 4, or 5, the terminal device directly determines that the uplink control channel for carrying control information is the first uplink control channel. For example, 1a is a PUCCH format 1a, 1b is a PUCCH format 1b, 3 is a PUCCH format 3, 4 is a PUCCH format 4, and 5 is a PUCCH format 5.

Optionally, when the terminal device determines that the format of the second uplink control channel is 1, 1a, or 1b, the terminal device determines, based on the relationship between the first time length and the second time length, the uplink control channel for carrying control information. When the terminal device determines that the format of the first uplink control channel is 3, 4, or 5, the terminal device directly determines that the uplink control channel for carrying control information is the first uplink control channel. For example, 1 is an sPUCCH format 1, 1a is an sPUCCH format 1a, 1b is an sPUCCH format 1b, 3 is an sPUCCH format 3, 4 is an sPUCCH format 4, and 5 is an sPUCCH format 5.

Optionally, when the terminal device determines that the format of the second uplink control channel is 1, 1a, or 1b, the terminal device determines, based on the relationship between the first time length and the second time length, the uplink control channel for carrying control information. When the terminal device determines that the format of the first uplink control channel is 3, 4, or 5, the terminal device directly determines that the uplink control channel for carrying control information is the first uplink control channel. For example, 1 is a PUCCH format 1, 1a is a PUCCH format 1a, 1b is a PUCCH format 1b, 3 is a PUCCH format 3, 4 is a PUCCH format 4, and 5 is a PUCCH format 5.

According to this solution, the terminal device may determine the format of the first uplink control channel. When both the first uplink control channel and the second uplink control channel are channels on which uplink channel selection may be performed, in other words, the HARQ-ACK message may be carried on an uplink control channel corresponding to the SR, the terminal device determines, based on the relationship between the first time length and the second time length, the uplink control channel for carrying control information. Otherwise, the terminal device directly determines that the uplink control channel for carrying control information is the first uplink control channel, without performing determining based on the relationship between the first time length and the second time length. In this manner, in a case of a specified format combination, both the HARQ-ACK message and the SR are sent when the HARQ-ACK message may be carried on the uplink control channel corresponding to the SR, so that information transmission efficiency is increased.

In a possible implementation, the format of the first uplink control channel is 1a, 1b, or 2, or the format of the first uplink control channel is 1a or 1b; and/or the format of the second uplink control channel is 1, 1a, 1b, or 2, or the format of the second uplink control channel is 1, 1a, or 1b. According to this solution, the terminal device may determine the format of the first uplink control channel. When both the first uplink control channel and the second uplink control channel are channels on which uplink channel selection may be performed, in other words, the HARQ-ACK message may be carried on an uplink control channel corresponding to the SR, the terminal device determines, based on the relationship between the first time length and the second time length, the uplink control channel for carrying control information. Otherwise, the terminal device directly determines that the uplink control channel for carrying control information is the first uplink control channel, without performing determining based on the relationship between the first time length and the second time length. In this manner, in a case of a specified format combination, both the HARQ-ACK message and the SR are sent when the HARQ-ACK message may be carried on the uplink control channel corresponding to the SR, so that information transmission efficiency is increased.

In a possible implementation, the terminal device determines the first time length based on higher layer signaling or a time length corresponding to downlink transmission; and/or the terminal device determines the second time length based on higher layer signaling. Optionally, the first time length is preset, and/or the second time length is preset.

According to this solution, the terminal device may learn of the first time length and the second time length.

In a possible implementation, the first uplink control channel and the second uplink control channel overlap in terms of time.

Optionally, when the first uplink control channel and the second uplink control channel overlap in terms of time, the terminal device determines, based on the relationship between the first time length and the second time length, the uplink control channel for carrying control information; or otherwise, the terminal device directly determines that the uplink control channel for carrying control information is the first uplink control channel or the second uplink control channel, without performing determining based on the relationship between the first time length and the second time length.

Optionally, a transmit time difference between the first uplink control channel and the second uplink control channel is less than or equal to a µs, where a is a predefined value, and a is a non-negative integer. Optionally, when the transmit time difference between the first uplink control channel and the second uplink control channel is less than or equal to a µs, the terminal device determines, based on the relationship between the first time length and the second time length, the uplink control channel for carrying control information; or otherwise, the terminal device directly determines that the uplink control channel for carrying control information is the first uplink control channel or the second uplink control channel, without performing determining based on the relationship between the first time length and the second time length.

Optionally, an overlap time between the first uplink control channel and the second uplink control channel is greater than or equal to b µs, where b is a predefined value, and b is a non-negative integer. Optionally, when the overlap time between the first uplink control channel and the second uplink control channel is greater than or equal to b µs, the terminal device determines, based on the relationship between the first time length and the second time length, the uplink control channel for carrying control information; or otherwise, the terminal device directly determines that the uplink control channel for carrying control information is the first uplink control channel or the second uplink control channel, without performing determining based on the relationship between the first time length and the second time length.

According to this solution, only when the first uplink control channel and the second uplink control channel overlap in terms of time, uplink control channel selection may be performed; or otherwise, the terminal device selects an uplink control channel overlapping a current time unit the most as the uplink control channel for carrying control information.

Optionally, the first uplink control channel and the second uplink control channel are uplink control channels on a same carrier, or the first uplink control channel and the second uplink control channel are uplink control channels on a same carrier group.

Optionally, the terminal device determines that the first uplink control channel and the second uplink control channel are uplink control channels on a same carrier or carrier group. It should be noted that if the first uplink control channel and the second uplink control channel are uplink control channels that are not on a same carrier, or the first uplink control channel and the second uplink control channel are uplink control channels that are not on a same carrier group, the terminal device may send both the first uplink control channel and the second uplink control channel, and does not perform the steps in the first aspect, because in this case, an uplink carrier characteristic is not damaged.

According to a second aspect, an embodiment of the present invention provides a method for sending control information. A terminal device determines an uplink control channel for carrying control information. The uplink control channel for carrying control information is a third uplink control channel or a fourth uplink control channel, the third uplink control channel and the fourth uplink control channel are used to carry an SR, a time length corresponding to the third uplink control channel is a third time length, a time length corresponding to the fourth uplink control channel is a fourth time length, and the third time length is greater than the fourth time length. The terminal device sends the SR on the uplink control channel for carrying control information.

In this embodiment of the present invention, according to the technical solutions provided in this application, not only an uplink single-carrier characteristic can be maintained, but also a suitable channel for carrying an SR can be selected, so that a probability of correct SR transmission is increased.

In a possible implementation, the terminal device determines, based on a time length corresponding to the uplink control channel for carrying control information, the uplink control channel for carrying control information.

Optionally, the terminal device determines an uplink control channel with a shorter time length as the uplink control channel for carrying control information.

Optionally, the terminal device determines an uplink control channel with a longer time length as the uplink control channel for carrying control information.

Optionally, the terminal device determines, based on a time length corresponding to the uplink control channel for carrying control information and higher layer signaling or a predefined rule, the uplink control channel for carrying control information.

According to this solution, the terminal device may select, based on a requirement of the terminal device or a higher layer signaling notification of a network device, a suitable channel for carrying an SR, so that a probability of correct SR transmission is increased.

In a possible implementation, before the determining, by a terminal device, an uplink control channel for carrying control information, the method further includes: determining, by the terminal device based on a time length corresponding to last downlink transmission, the time length corresponding to the uplink control channel for carrying control information; or determining, by the terminal device based on a time length corresponding to an uplink control channel for carrying a HARQ-ACK message, the time length corresponding to the uplink control channel for carrying control information. According to this solution, the terminal device may determine, based on the last downlink transmission or the uplink control channel for a HARQ-ACK message, a currently suitable channel for carrying an SR, so that a probability of correct SR transmission is increased.

In a possible implementation, the terminal device determines that the uplink control channel for carrying control information is the fourth uplink control channel, and the fourth uplink control channel and an uplink channel other than the third uplink control channel do not overlap in terms of time; or the terminal device determines that the uplink control channel for carrying control information is the fourth uplink control channel, and there is no downlink transmission on X time units preceding a time unit on which the third uplink control channel is located or there is no downlink transmission on Y time units preceding a time unit on which the four uplink control channel is located. According to this solution, when the terminal device determines that no other uplink control channel is to be sent or there has been no downlink transmission for a long time, the terminal device determines an uplink control channel with a shorter time as the uplink control channel for carrying control information.

In a possible implementation, the terminal device determines that the uplink control channel for carrying control information is the fourth uplink control channel, and at least a part or all of the fourth uplink control channel and the third uplink control channel overlap in terms of time. According to this solution, only when the third uplink control channel and the fourth uplink control channel overlap in terms of time, uplink control channel selection may be performed; or otherwise, the terminal device selects an uplink control channel overlapping a current time unit the most as the uplink control channel for carrying control information. Optionally, the third uplink control channel and the fourth uplink control channel are uplink control channels on a same carrier, or the third uplink control channel and the fourth uplink control channel are uplink control channels on a same carrier group.

Optionally, the terminal device determines that the third uplink control channel and the fourth uplink control channel are uplink control channels on a same carrier or carrier group. It should be noted that if the third uplink control channel and the fourth uplink control channel are uplink control channels that are not on a same carrier, or the third uplink control channel and the fourth uplink control channel are uplink control channels that are not on a same carrier group, the terminal device may send both the third uplink control channel and the fourth uplink control channel, and does not perform the steps in the second aspect, because in this case, an uplink carrier characteristic is not damaged.

According to a third aspect, an embodiment of the present invention provides a method for detecting control information. A network device determines, based on a relationship between a first time length and a second time length, an uplink control channel, detected by the network device, for carrying control information. The uplink control channel for carrying control information is at least one of a first uplink control channel and a second uplink control channel, the first time length is a time length corresponding to the first uplink control channel, the second time length is a time length corresponding to the second uplink control channel, the first uplink control channel is used to carry a HARQ-ACK message, and the second uplink control channel is used to carry an SR. The network device detects the uplink control channel for carrying control information. The control information includes at least the HARQ-ACK message.

In this embodiment of the present invention, according to the technical solutions provided in this application, the network device determines, by determining the relationship between the first time length corresponding to the first uplink control channel and the second time length corresponding to the second uplink control channel, for example, determining whether the first time length is equal to or the same as the second time length, the uplink control channel, detected by the network device, for carrying control information. When the first time length is the same as the second time length, the network device determines that the uplink control channel, detected by the network device, for carrying control information is the first uplink control channel and the second uplink control channel, and the network device needs to blindly detect the two uplink control channels, so that timely transmission of the HARQ-ACK message and the SR can be ensured. When the first time length is different from the second time length, the network device determines that the uplink control channel, detected by the network device, for carrying control information is the first uplink control channel, to prevent the network device from detecting two channels with different TTI lengths, so that costs of the network device are reduced.

In a possible implementation, when the first time length is equal to the second time length, the network device determines that the uplink control channel, detected by the network device, for carrying control information is the first uplink control channel and the second uplink control channel. According to this solution, when the first time length is the same as the second time length, the network device determines that the uplink control channel, detected by the network device, for carrying control information is the first uplink control channel and the second uplink control channel, and the network device needs to blindly detect the two uplink control channels, so that timely transmission of the HARQ-ACK message and the SR can be ensured.

In a possible implementation, after the detecting, by the network device, the uplink control channel for carrying control information, the method further includes: receiving, by the network device, the HARQ-ACK message and the SR on the uplink control channel for carrying control information. The uplink control channel for carrying control information is the second uplink control channel.

Optionally, the network device determines, based on a case in which the first time length is the same as the second time length, that the uplink control channel, detected by the network device, for carrying control information is the first uplink control channel and the second uplink control channel.

Optionally, the network device determines, based on a case in which the first time length is less than or equal to the second time length, that the uplink control channel, detected by the network device, for carrying control information is the first uplink control channel and the second uplink control channel.

According to this solution, the network device determines that the uplink control channel, detected by the network device, for carrying control information is the first uplink control channel and the second uplink control channel, and the network device needs to blindly detect the two uplink control channels, so that timely transmission of the HARQ-ACK message and the SR can be ensured. It may be understood that it is an optimal solution that the two time lengths are the same. If the first time length is less than or equal to the second time length, receiving the HARQ-ACK message on the second uplink control channel increases a transmission latency of the HARQ-ACK message.

In a possible implementation, when the first time length is unequal to the second time length, the network device determines that the uplink control channel, detected by the network device, for carrying control information is the first uplink control channel.

Optionally, the network device determines, based on a case in which the first time length is different from the second time length, that the uplink control channel, detected by the network device, for carrying control information is the first uplink control channel.

Optionally, the network device determines, based on a case in which the first time length is less than or greater than the second time length, that the uplink control channel, detected by the network device, for carrying control information is the first uplink control channel. According to this solution, when the first time length is different from the second time length, the network device determines that the uplink control channel, detected by the network device, for carrying control information is the first uplink control channel, and does not detect the second uplink control channel, to prevent the network device from detecting two channels with different TTI lengths, so that costs of the network device are reduced, and timely transmission of the HARQ-ACK message can be ensured.

In a possible implementation, after the detecting, by the network device, the uplink control channel for carrying control information, the method further includes: receiving, by the network device, the HARQ-ACK message on the uplink control channel for carrying control information. The uplink control channel for carrying control information is the first uplink control channel.

According to this solution, the network device selects a resource corresponding to the first uplink control channel to receive the HARQ-ACK message instead of using a resource corresponding to the second uplink control channel, thereby avoiding a disadvantage of increasing a transmission latency of the HARQ-ACK message when the first time length is less than the second time length, avoiding a disadvantage of reducing accuracy of the HARQ-ACK message on the second uplink control channel when the first time length is greater than the second time length, and ensuring timely and accurate transmission of the HARQ-ACK message without damaging an uplink single-carrier characteristic.

In a possible implementation, the network device does not detect the second uplink control channel. The first time length is unequal to the second time length. Therefore, the network device determines that the uplink control channel, detected by the network device, for carrying control information is the first uplink control channel, and does not detect the second uplink control channel, to prevent the network device from detecting two channels with different TTI lengths, so that costs of the network device are reduced, and timely transmission of the HARQ-ACK message can be ensured.

In a possible implementation, a service priority corresponding to the HARQ-ACK message is higher than or equal to a service priority corresponding to the SR, or a latency requirement of a downlink data service corresponding to the HARQ-ACK message is higher than or equal to a latency requirement of an uplink data service corresponding to the SR.

Optionally, if the service priority corresponding to the HARQ-ACK message is lower than the service priority corresponding to the SR, or the latency requirement of the downlink data service corresponding to the HARQ-ACK message is lower than the latency requirement of the uplink data service corresponding to the SR, the network device determines, based on the relationship between the first time length and the second time length, the uplink control channel, detected by the network device, for carrying control information, and the network device receives at least the SR on the uplink control channel for carrying control information. Optionally, the network device determines the service priority corresponding to the HARQ-ACK message or the latency requirement of the downlink data service corresponding to the HARQ-ACK message.

Optionally, the network device determines the service priority corresponding to the SR or a latency requirement of a downlink data service corresponding to the SR.

According to this solution, the network device may determine a priority relationship between the HARQ-ACK message and the SR, to determine, when the first time length is unequal to the second time length, the uplink control channel, detected by the network device, for carrying control information, so that more important information can be received while an uplink single-carrier characteristic is prevented from being damaged.

In a possible implementation, before the determining, by a network device, an uplink control channel, detected by the network device, for carrying control information, the method further includes: determining, by the network device, a format of the first uplink control channel; and/or determining, by the network device, a format of the second uplink control channel. Optionally, when the network device determines that the format of the first uplink control channel is 1a, 1b, or 2, the network device determines, based on the relationship between the first time length and the second time length, the uplink control channel, detected by the network device, for carrying control information. When the network device determines that the format of the first uplink control channel is 3, 4, or 5, the network device directly determines that the uplink control channel, detected by the network device, for carrying control information is the first uplink control channel. For example, 1a is an sPUCCH format 1a, 1b is an sPUCCH format 1b, 2 is an sPUCCH format 2, 3 is an sPUCCH format 3, 4 is an sPUCCH format 4, and 5 is an sPUCCH format 5.

Optionally, when the network device determines that the format of the first uplink control channel is 1a or 1b, the network device determines, based on the relationship between the first time length and the second time length, the uplink control channel, detected by the network device, for carrying control information. When the network device determines that the format of the first uplink control channel is 3, 4, or 5, the network device directly determines that the uplink control channel, detected by the network device, for carrying control information is the first uplink control channel. For example, 1a is a PUCCH format 1a, 1b is a PUCCH format 1b, 3 is a PUCCH format 3, 4 is a PUCCH format 4, and 5 is a PUCCH format 5.

Optionally, when the network device determines that the format of the first uplink control channel is 1, 1a, or 1b, the network device determines, based on the relationship between the first time length and the second time length, the uplink control channel, detected by the network device, for carrying control information. When the network device determines that the format of the first uplink control channel is 3, 4, or 5, the network device directly determines that the uplink control channel, detected by the network device, for carrying control information is the first uplink control channel. For example, 1 is an sPUCCH format 1, 1a is an sPUCCH format 1a, 1b is an sPUCCH format 1b, 3 is an sPUCCH format 3, 4 is an sPUCCH format 4, and 5 is an sPUCCH format 5.

Optionally, when the network device determines that the format of the first uplink control channel is 1, 1a, or 1b, the network device determines, based on the relationship between the first time length and the second time length, the uplink control channel, detected by the network device, for carrying control information. When the network device determines that the format of the first uplink control channel is 3, 4, or 5, the network device directly determines that the uplink control channel, detected by the network device, for carrying control information is the first uplink control channel. For example, 1 is a PUCCH format 1, 1a is a PUCCH format 1a, 1b is a PUCCH format 1b, 3 is a PUCCH format 3, 4 is a PUCCH format 4, and 5 is a PUCCH format 5.

According to this solution, the network device may determine the format of the first uplink control channel. When both the first uplink control channel and the second uplink control channel are channels on which uplink channel selection may be performed, in other words, the HARQ-ACK message may be carried on an uplink control channel corresponding to the SR, the network device determines, based on the relationship between the first time length and the second time length, the uplink control channel, detected by the network device, for carrying control information. Otherwise, the network device directly determines that the uplink control channel, detected by the network device, for carrying control information is the first uplink control channel, without performing determining based on the relationship between the first time length and the second time length. In this manner, in a case of a specified format combination, the first uplink control channel and the second uplink control channel are detected when the HARQ-ACK message may be carried on the uplink control channel corresponding to the SR, so that information transmission efficiency is increased.

In a possible implementation, the format of the first uplink control channel is 1a, 1b, or 2, or the format of the first uplink control channel is 1a or 1b; and/or the format of the second uplink control channel is 1, 1a, 1b, or 2, or the format of the second uplink control channel is 1, 1a, or 1b. According to this solution, the network device may determine the format of the first uplink control channel. When both the first uplink control channel and the second uplink control channel are channels on which uplink channel selection may be performed, in other words, the HARQ-ACK message may be carried on an uplink control channel corresponding to the SR, the network device determines, based on the relationship between the first time length and the second time length, the uplink control channel, detected by the network device, for carrying control information. Otherwise, the network device directly determines that the uplink control channel, detected by the network device, for carrying control information is the first uplink control channel, without performing determining based on the relationship between the first time length and the second time length. In this manner, in a case of a specified format combination, the first uplink control channel and the second uplink control channel are detected when the HARQ-ACK message may be carried on the uplink control channel corresponding to the SR, and in a case of another format, only the first uplink control channel is detected, so that detection efficiency is increased.

In a possible implementation, the network device determines the first time length based on higher layer signaling or a time length corresponding to downlink transmission; and/or the network device determines the second time length based on higher layer signaling. Optionally, the first time length is preset, and/or the second time length is preset.

According to this solution, the network device may learn of the first time length and the second time length.

In a possible implementation, the first uplink control channel and the second uplink control channel overlap in terms of time.

Optionally, when the first uplink control channel and the second uplink control channel overlap in terms of time, the network device determines, based on the relationship between the first time length and the second time length, the uplink control channel, detected by the network device, for carrying control information; or otherwise, the network device directly determines that the uplink control channel, detected by the network device, for carrying control information is the first uplink control channel or the second uplink control channel, without performing determining based on the relationship between the first time length and the second time length.

Optionally, a transmit time difference between the first uplink control channel and the second uplink control channel is less than or equal to a µs, where a is a predefined value, and a is a non-negative integer. Optionally, when the transmit time difference between the first uplink control channel and the second uplink control channel is less than or equal to a µs, the network device determines, based on the relationship between the first time length and the second time length, the uplink control channel, detected by the network device, for carrying control information; or otherwise, the network device directly determines that the uplink control channel, detected by the network device, for carrying control information is the first uplink control channel or the second uplink control channel, without performing determining based on the relationship between the first time length and the second time length. Optionally, an overlap time between the first uplink control channel and the second uplink control channel is greater than or equal to b µs, where b is a predefined value, and b is a non-negative integer. Optionally, when the overlap time between the first uplink control channel and the second uplink control channel is greater than or equal to b µs, the network device determines, based on the relationship between the first time length and the second time length, the uplink control channel, detected by the network device, for carrying control information; or otherwise, the network device directly determines that the uplink control channel, detected by the network device, for carrying control information is the first uplink control channel or the second uplink control channel, without performing determining based on the relationship between the first time length and the second time length.

According to this solution, only when the first uplink control channel and the second uplink control channel overlap in terms of time, uplink control channel selection may be performed; or otherwise, the network device selects an uplink control channel overlapping a current time unit the most as the uplink control channel, detected by the network device, for carrying control information.

Optionally, the first uplink control channel and the second uplink control channel are uplink control channels on a same carrier, or the first uplink control channel and the second uplink control channel are uplink control channels on a same carrier group.

Optionally, the network device determines that the first uplink control channel and the second uplink control channel are uplink control channels on a same carrier or carrier group. It should be noted that if the first uplink control channel and the second uplink control channel are uplink control channels that are not on a same carrier, or the first uplink control channel and the second uplink control channel are uplink control channels that are not on a same carrier group, the network device directly determines that the uplink control channel, detected by the network device, for carrying control information is the first uplink control channel and the second uplink control channel.

According to a fourth aspect, an embodiment of the present invention provides a method for detecting control information. A network device determines an uplink control channel, detected by the network device, for carrying control information. The uplink control channel for carrying control information is at least one of a third uplink control channel and a fourth uplink control channel, the third uplink control channel and the fourth uplink control channel are used to carry an SR, a time length corresponding to the third uplink control channel is a third time length, a time length corresponding to the fourth uplink control channel is a fourth time length, and the third time length is greater than the fourth time length. The network device detects the uplink control channel for carrying control information. The control information includes the SR.

In this embodiment of the present invention, according to the technical solutions provided in this application, not only an uplink single-carrier characteristic can be maintained, but also a suitable channel, detected by the network device, for carrying an SR can be selected, so that a probability of correct SR transmission is increased.

In a possible implementation, the network device determines, based on a time length corresponding to the uplink control channel for carrying control information, the uplink control channel, detected by the network device, for carrying control information.

Optionally, the network device determines an uplink control channel with a shorter time length as the uplink control channel, detected by the network device, for carrying control information.

Optionally, the network device determines an uplink control channel with a longer time length as the uplink control channel, detected by the network device, for carrying control information.

Optionally, the network device determines, based on a time length corresponding to the uplink control channel for carrying control information and higher layer signaling or a predefined rule, the uplink control channel, detected by the network device, for carrying control information.

According to this solution, the network device may determine, based on the predefined rule or a higher layer signaling notification of the network device, the uplink control channel, detected by the network device, for carrying control information, so that a quantity of detection times of the network device can be reduced.

In a possible implementation, before the determining, by a network device, an uplink control channel, detected by the network device, for carrying control information, the method further includes: determining, by the network device based on a time length corresponding to last downlink transmission, the time length corresponding to the uplink control channel, detected by the network device, for carrying control information; or determining, by the network device based on a time length corresponding to an uplink control channel for carrying a HARQ-ACK message, the time length corresponding to the uplink control channel, detected by the network device, for carrying control information. According to this solution, the network device may determine, based on the last downlink transmission or the uplink control channel for a HARQ-ACK message, a currently suitable channel, detected by the network device, for carrying an SR, so that a probability of correct SR transmission is increased.

In a possible implementation, the network device determines that the uplink control channel, detected by the network device, for carrying control information is the fourth uplink control channel, and the fourth uplink control channel and an uplink channel other than the third uplink control channel do not overlap in terms of time; or the network device determines that the uplink control channel, detected by the network device, for carrying control information is the fourth uplink control channel, and there is no downlink transmission on X time units preceding a time unit on which the third uplink control channel is located or there is no downlink transmission on Y time units preceding a time unit on which the four uplink control channel is located. According to this solution, when the network device determines that no other uplink control channel is to be sent or there has been no downlink transmission for a long time, the network device determines an uplink control channel with a shorter time as the uplink control channel, detected by the network device, for carrying control information, so that a quantity of detection times of the network device can be reduced.

In a possible implementation, the network device determines that the uplink control channel, detected by the network device, for carrying control information is the fourth uplink control channel, and at least a part or all of the fourth uplink control channel and the third uplink control channel overlap in terms of time. According to this solution, only when the third uplink control channel and the fourth uplink control channel overlap in terms of time, uplink control channel selection may be performed; or otherwise, the network device selects an uplink control channel overlapping a current time unit the most as the uplink control channel, detected by the network device, for carrying control information.

Optionally, the third uplink control channel and the fourth uplink control channel are uplink control channels on a same carrier, or the third uplink control channel and the fourth uplink control channel are uplink control channels on a same carrier group.

Optionally, the network device determines that the third uplink control channel and the fourth uplink control channel are uplink control channels on a same carrier or carrier group. It should be noted that if the third uplink control channel and the fourth uplink control channel are uplink control channels that are not on a same carrier, or the third uplink control channel and the fourth uplink control channel are uplink control channels that are not on a same carrier group, the network device directly determines that the uplink control channel, detected by the network device, for carrying control information is the third uplink control channel and the fourth uplink control channel.

According to a fifth aspect, an embodiment of the present invention provides a method for sending control information. A terminal device determines, based on a relationship between a fifth time length and a sixth time length, an uplink control channel for carrying control information. The uplink control channel for carrying control information is a fifth uplink control channel or a sixth uplink control channel, the fifth time length is a time length corresponding to the fifth uplink control channel, the sixth time length is a time length corresponding to the sixth uplink control channel, the fifth uplink control channel is used to carry a HARQ-ACK message, and the sixth uplink control channel is used to carry an SR. The terminal device sends at least the SR on the uplink control channel for carrying control information.

In this embodiment of the present invention, according to the technical solutions provided in this application, not only an uplink single-carrier characteristic can be maintained, but also the SR can be first transmitted. The terminal device determines, by determining the relationship between the fifth time length corresponding to the fifth uplink control channel and the sixth time length corresponding to the sixth uplink control channel, for example, determining whether the fifth time length is equal to or the same as the sixth time length, to send the uplink control channel for carrying control information. When the fifth time length is the same as the sixth time length, the terminal device selects a resource corresponding to the fifth uplink control channel to send the HARQ-ACK message and the SR; or when the fifth time length is different from the sixth time length, the terminal device selects a resource corresponding to the sixth uplink control channel to send the SR. Therefore, the terminal device is prevented from sending two channels with different TTI lengths, and the uplink single-carrier characteristic is prevented from being damaged, so that important information can be correctly transmitted while costs of the terminal device are reduced.

In a possible implementation, when the fifth time length is equal to the sixth time length, the terminal device determines that the uplink control channel for carrying control information is the sixth uplink control channel. According to this solution, when the fifth time length is the same as the sixth time length, the terminal device selects a resource corresponding to the sixth uplink control channel to send the HARQ-ACK message and the SR. Using the sixth uplink control channel is equivalent to implicitly notifying a network device that the terminal device sends the SR. In this case, because the two time lengths are the same, the terminal device sends both the HARQ-ACK message and the SR on a same channel, thereby ensuring timely transmission of the HARQ-ACK message and the SR without damaging an uplink single-carrier characteristic.

In a possible implementation, the terminal device sends the HARQ-ACK message and the SR on the uplink control channel for carrying control information. The uplink control channel for carrying control information is the sixth uplink control channel.

Optionally, the terminal device determines, based on a case in which the fifth time length is the same as the sixth time length, that the uplink control channel for carrying control information is the sixth uplink control channel.

Optionally, the terminal device determines, based on a case in which the fifth time length is less than or equal to the sixth time length, that the uplink control channel for carrying control information is the sixth uplink control channel.

According to this solution, the terminal device selects a resource corresponding to the sixth uplink control channel to send the HARQ-ACK message and the SR. Using the sixth uplink control channel is equivalent to implicitly notifying a network device that the terminal device sends the SR. In this case, because the two time lengths are the same or the fifth time length is less than or equal to the sixth time length, the terminal device sends both the HARQ-ACK message and the SR on a same channel, thereby ensuring timely transmission of the HARQ-ACK message and the SR without damaging an uplink single-carrier characteristic. It may be understood that it is an optimal solution that the two time lengths are the same. If the fifth time length is less than or equal to the sixth time length, sending the HARQ-ACK message on the sixth uplink control channel increases a transmission latency of the HARQ-ACK message.

In a possible implementation, when the fifth time length is unequal to the sixth time length, the uplink control channel for carrying control information is the sixth uplink control channel. According to this solution, when the fifth time length is different from the sixth time length, the terminal device selects a resource corresponding to the sixth uplink control channel to send the SR instead of using a resource corresponding to the fifth uplink control channel, thereby avoiding a disadvantage of increasing a transmission latency of the SR, and ensuring timely transmission of the SR without damaging an uplink single-carrier characteristic.

In a possible implementation, the terminal device sends the SR on the uplink control channel for carrying control information. The uplink control channel for carrying control information is the sixth uplink control channel.

Optionally, the terminal device determines, based on a case in which the fifth time length is different from the sixth time length, that the uplink control channel for carrying control information is the sixth uplink control channel.

Optionally, the terminal device determines, based on a case in which the fifth time length is less than or greater than the sixth time length, that the uplink control channel for carrying control information is the sixth uplink control channel.

According to this solution, the terminal device selects a resource corresponding to the sixth uplink control channel to send the SR instead of using a resource corresponding to the fifth uplink control channel, thereby avoiding a disadvantage of increasing a transmission latency of the SR when the sixth time length is less than the fifth time length, avoiding a disadvantage of reducing accuracy of the SR on the fifth uplink control channel when the sixth time length is greater than the fifth time length, and ensuring timely and accurate transmission of the SR without damaging an uplink single-carrier characteristic.

In a possible implementation, the terminal device discards the HARQ-ACK message, where the uplink control channel for carrying control information is the sixth uplink control channel; or the terminal device discards the HARQ-ACK message, where the fifth time length is unequal to the sixth time length. According to this solution, the terminal device chooses to discard the HARQ-ACK message, and the terminal device selects a resource corresponding to the sixth uplink control channel to send the SR instead of using a resource corresponding to the fifth uplink control channel, so that the following cases are avoided. Case 1: An uplink single-carrier characteristic is damaged when two uplink channels are sent. Case 2: A transmission latency of the SR is increased when the sixth time length is less than the fifth time length. Case 3: Accuracy of the SR on the fifth uplink control channel is reduced when the sixth time length is greater than the fifth time length. In this way, timely and accurate transmission of the SR can be ensured.

In a possible implementation, a service priority corresponding to the HARQ-ACK message is lower than a service priority corresponding to the SR, or a latency requirement of a downlink data service corresponding to the HARQ-ACK message is lower than a latency requirement of an uplink data service corresponding to the SR.

Optionally, if the service priority corresponding to the HARQ-ACK message is lower than the service priority corresponding to the SR, or the latency requirement of the downlink data service corresponding to the HARQ-ACK message is lower than the latency requirement of the uplink data service corresponding to the SR, the terminal device determines, based on the relationship between the fifth time length and the sixth time length, the uplink control channel for carrying control information, and the terminal sends at least the SR on the uplink control channel for carrying control information.

Optionally, the terminal device determines the service priority corresponding to the HARQ-ACK message or the latency requirement of the downlink data service corresponding to the HARQ-ACK message.

Optionally, the terminal device determines the service priority corresponding to the SR or a latency requirement of a downlink data service corresponding to the SR.

According to this solution, the terminal device may determine a priority relationship between the HARQ-ACK message and the SR, and the fifth time length is unequal to the sixth time length, so that more important information can be sent while an uplink single-carrier characteristic is prevented from being damaged.

In a possible implementation, before the determining, by a terminal device, an uplink control channel for carrying control information, the method further includes: determining, by the terminal device, the service priority corresponding to the HARQ-ACK message; and/or determining, by the terminal device, the service priority corresponding to the SR.

In a possible implementation, the fifth uplink control channel and the sixth uplink control channel overlap in terms of time.

Optionally, when the fifth uplink control channel and the sixth uplink control channel overlap in terms of time, the terminal device determines, based on the relationship between the fifth time length and the sixth time length, the uplink control channel for carrying control information; or otherwise, the terminal device directly determines that the uplink control channel for carrying control information is the fifth uplink control channel or the sixth uplink control channel, without performing determining based on the relationship between the fifth time length and the sixth time length.

Optionally, a transmit time difference between the fifth uplink control channel and the sixth uplink control channel is less than or equal to c µs, where c is a predefined value, and c is a non-negative integer. Optionally, when the transmit time difference between the fifth uplink control channel and the sixth uplink control channel is less than or equal to c µs, the terminal device determines, based on the relationship between the fifth time length and the sixth time length, the uplink control channel for carrying control information; or otherwise, the terminal device directly determines that the uplink control channel for carrying control information is the fifth uplink control channel or the sixth uplink control channel, without performing determining based on the relationship between the fifth time length and the sixth time length. Optionally, an overlap time between the fifth uplink control channel and the sixth uplink control channel is greater than or equal to d µs, where d is a predefined value, and d is a non-negative integer. Optionally, when the overlap time between the fifth uplink control channel and the sixth uplink control channel is greater than or equal to d µs, the terminal device determines, based on the relationship between the fifth time length and the sixth time length, the uplink control channel for carrying control information; or otherwise, the terminal device directly determines that the uplink control channel for carrying control information is the fifth uplink control channel or the sixth uplink control channel, without performing determining based on the relationship between the fifth time length and the sixth time length. According to this solution, only when the fifth uplink control channel and the sixth uplink control channel overlap in terms of time, uplink control channel selection may be performed; or otherwise, the terminal device selects an uplink control channel overlapping a current time unit the most as the uplink control channel for carrying control information.

Optionally, the fifth uplink control channel and the sixth uplink control channel are uplink control channels on a same carrier, or the fifth uplink control channel and the sixth uplink control channel are uplink control channels on a same carrier group.

Optionally, the terminal device determines that the fifth uplink control channel and the sixth uplink control channel are uplink control channels on a same carrier or carrier group. It should be noted that if the fifth uplink control channel and the sixth uplink control channel are uplink control channels that are not on a same carrier, or the fifth uplink control channel and the sixth uplink control channel are uplink control channels that are not on a same carrier group, the terminal device may send both the fifth uplink control channel and the sixth uplink control channel, and does not perform the steps in the fifth aspect, because in this case, an uplink carrier characteristic is not damaged.

According to a sixth aspect, an embodiment of the present invention provides a method for detecting control information. A network device determines, based on a relationship between a fifth time length and a sixth time length, an uplink control channel, detected by the network device, for carrying control information. The uplink control channel for carrying control information is at least one of a fifth uplink control channel and a sixth uplink control channel, the fifth time length is a time length corresponding to the fifth uplink control channel, the sixth time length is a time length corresponding to the sixth uplink control channel, the fifth uplink control channel is used to carry a HARQ-ACK message, and the sixth uplink control channel is used to carry an SR. The network device detects the uplink control channel for carrying control information. The control information includes at least the SR.

In this embodiment of the present invention, according to the technical solutions provided in this application, the network device determines, by determining the relationship between the fifth time length corresponding to the fifth uplink control channel and the sixth time length corresponding to the sixth uplink control channel, for example, determining whether the fifth time length is equal to or the same as the sixth time length, the uplink control channel, detected by the network device, for carrying control information. When the fifth time length is the same as the sixth time length, the network device determines that the uplink control channel, detected by the network device, for carrying control information is the first uplink control channel and the second uplink control channel, and the network device needs to blindly detect the two uplink control channels, so that timely transmission of the HARQ-ACK message and the SR can be ensured. When the fifth time length is different from the sixth time length, the network device determines that the uplink control channel, detected by the network device, for carrying control information is the sixth uplink control channel, to prevent the network device from detecting two channels with different TTI lengths, so that costs of the network device are reduced.

In a possible implementation, when the fifth time length is equal to the sixth time length, the network device determines that the uplink control channel, detected by the network device, for carrying control information is the fifth uplink control channel and the sixth uplink control channel. According to this solution, when the fifth time length is the same as the sixth time length, the network device determines that the uplink control channel, detected by the network device, for carrying control information is the fifth uplink control channel and the sixth uplink control channel, and the network device needs to blindly detect the two uplink control channels, so that timely transmission of the HARQ-ACK message and the SR can be ensured. In a possible implementation, after the detecting, by the network device, the uplink control channel for carrying control information, the method further includes: receiving, by the network device, the HARQ-ACK message and the SR on the uplink control channel for carrying control information. The uplink control channel for carrying control information is the sixth uplink control channel.

Optionally, the network device determines, based on a case in which the fifth time length is the same as the sixth time length, that the uplink control channel, detected by the network device, for carrying control information is the fifth uplink control channel and the sixth uplink control channel.

Optionally, the network device determines, based on a case in which the fifth time length is less than or equal to the sixth time length, that the uplink control channel, detected by the network device, for carrying control information is the fifth uplink control channel and the sixth uplink control channel.

According to this solution, the network device determines that the uplink control channel, detected by the network device, for carrying control information is the fifth uplink control channel and the sixth uplink control channel, and the network device needs to blindly detect the two uplink control channels, so that timely transmission of the HARQ-ACK message and the SR can be ensured. It may be understood that it is an optimal solution that the two time lengths are the same. If the fifth time length is less than or equal to the sixth time length, receiving the HARQ-ACK message on the sixth uplink control channel increases a transmission latency of the HARQ-ACK message.

In a possible implementation, when the fifth time length is unequal to the sixth time length, the network device determines that the uplink control channel, detected by the network device, for carrying control information is the sixth uplink control channel.

Optionally, the network device determines, based on a case in which the fifth time length is different from the sixth time length, that the uplink control channel, detected by the network device, for carrying control information is the sixth uplink control channel.

Optionally, the network device determines, based on a case in which the fifth time length is less than or greater than the sixth time length, that the uplink control channel, detected by the network device, for carrying control information is the sixth uplink control channel. According to this solution, when the fifth time length is different from the sixth time length, the network device determines that the uplink control channel, detected by the network device, for carrying control information is the sixth uplink control channel, and does not detect the fifth uplink control channel, to prevent the network device from detecting two channels with different TTI lengths, so that costs of the network device are reduced, and timely transmission of the SR can be ensured.

In a possible implementation, after the detecting, by the network device, the uplink control channel for carrying control information, the method further includes: receiving, by the network device, the SR on the uplink control channel for carrying control information. The uplink control channel for carrying control information is the sixth uplink control channel. According to this solution, the network device selects a resource corresponding to the sixth uplink control channel to receive the SR instead of using a resource corresponding to the fifth uplink control channel, thereby avoiding a disadvantage of increasing a transmission latency of the SR when the sixth time length is less than the fifth time length, avoiding a disadvantage of reducing accuracy of the SR on the fifth uplink control channel when the sixth time length is greater than the fifth time length, and ensuring timely and accurate transmission of the SR without damaging an uplink single-carrier characteristic.

In a possible implementation, the network device does not detect the fifth uplink control channel. The fifth time length is unequal to the sixth time length. Therefore, the network device determines that the uplink control channel, detected by the network device, for carrying control information is the sixth uplink control channel, and does not detect the fifth uplink control channel, to prevent the network device from detecting two channels with different TTI lengths, so that costs of the network device are reduced, and timely transmission of the SR can be ensured.

In a possible implementation, a service priority corresponding to the HARQ-ACK message is lower than a service priority corresponding to the SR, or a latency requirement of a downlink data service corresponding to the HARQ-ACK message is lower than a latency requirement of an uplink data service corresponding to the SR.

Optionally, if the service priority corresponding to the HARQ-ACK message is lower than the service priority corresponding to the SR, or the latency requirement of the downlink data service corresponding to the HARQ-ACK message is lower than the latency requirement of the uplink data service corresponding to the SR, the network device determines, based on the relationship between the fifth time length and the sixth time length, the uplink control channel for carrying control information, and the terminal sends at least the SR on the uplink control channel for carrying control information.

Optionally, the network device determines the service priority corresponding to the HARQ-ACK message or the latency requirement of the downlink data service corresponding to the HARQ-ACK message.

Optionally, the network device determines the service priority corresponding to the SR or a latency requirement of a downlink data service corresponding to the SR.

According to this solution, the network device may determine a priority relationship between the HARQ-ACK message and the SR, and the fifth time length is unequal to the sixth time length, so that more important information can be sent while an uplink single-carrier characteristic is prevented from being damaged.

In a possible implementation, before the determining, by a network device, an uplink control channel, detected by the network device, for carrying control information, the method further includes: determining, by the network device, the service priority corresponding to the HARQ-ACK message; and/or determining, by the network device, the service priority corresponding to the SR.

In a possible implementation, the fifth uplink control channel and the sixth uplink control channel overlap in terms of time.

Optionally, when the fifth uplink control channel and the sixth uplink control channel overlap in terms of time, the network device determines, based on the relationship between the fifth time length and the sixth time length, the uplink control channel, detected by the network device, for carrying control information; or otherwise, the network device directly determines that the uplink control channel, detected by the network device, for carrying control information is the fifth uplink control channel or the sixth uplink control channel, without performing determining based on the relationship between the fifth time length and the sixth time length.

Optionally, a transmit time difference between the fifth uplink control channel and the sixth uplink control channel is less than or equal to c µs, where c is a predefined value, and c is a non-negative integer. Optionally, when the transmit time difference between the fifth uplink control channel and the sixth uplink control channel is less than or equal to c µs, the network device determines, based on the relationship between the fifth time length and the sixth time length, the uplink control channel, detected by the network device, for carrying control information; or otherwise, the network device directly determines that the uplink control channel, detected by the network device, for carrying control information is the fifth uplink control channel or the sixth uplink control channel, without performing determining based on the relationship between the fifth time length and the sixth time length.

Optionally, an overlap time between the fifth uplink control channel and the sixth uplink control channel is greater than or equal to d µs, where d is a predefined value, and d is a non-negative integer. Optionally, when the overlap time between the fifth uplink control channel and the sixth uplink control channel is greater than or equal to d µs, the network device determines, based on the relationship between the fifth time length and the sixth time length, the uplink control channel, detected by the network device, for carrying control information; or otherwise, the network device directly determines that the uplink control channel, detected by the network device, for carrying control information is the fifth uplink control channel or the sixth uplink control channel, without performing determining based on the relationship between the fifth time length and the sixth time length.

According to this solution, only when the fifth uplink control channel and the sixth uplink control channel overlap in terms of time, uplink control channel selection may be performed; or otherwise, the network device selects an uplink control channel overlapping a current time unit the most as the uplink control channel for carrying control information.

Optionally, the fifth uplink control channel and the sixth uplink control channel are uplink control channels on a same carrier, or the fifth uplink control channel and the sixth uplink control channel are uplink control channels on a same carrier group.

Optionally, the network device determines that the fifth uplink control channel and the sixth uplink control channel are uplink control channels on a same carrier or carrier group. It should be noted that if the fifth uplink control channel and the sixth uplink control channel are uplink control channels that are not on a same carrier, or the fifth uplink control channel and the sixth uplink control channel are uplink control channels that are not on a same carrier group, the network device directly determines that the uplink control channel, detected by the network device, for carrying control information is the fifth uplink control channel and the sixth uplink control channel.

According to another aspect, an embodiment of the present invention provides a terminal device. The terminal device can implement the functions performed by the terminal device in the foregoing method example. The functions may be implemented by hardware, or may be implemented by hardware by executing corresponding software. The hardware or the software includes one or more modules corresponding to the functions.

In a possible design, a structure of the terminal device includes a processor and a communications interface. The processor is configured to support the terminal device in performing the corresponding functions in the foregoing method. The communications interface is configured to support communication between the terminal device and a network device or another network element. The terminal device may further include a memory. The memory is configured to be coupled to the processor, and stores a program instruction and data that are necessary for the terminal device.

According to another aspect, an embodiment of the present invention provides a network device. The network device can implement the functions performed by the network device in the foregoing method embodiment. The functions may be implemented by hardware, or may be implemented by hardware by executing corresponding software. The hardware or the software includes one or more modules corresponding to the functions.

In a possible design, a structure of the network device includes a processor and a communications interface. The processor is configured to support the network device in performing the corresponding functions in the foregoing method. The communications interface is configured to support communication between the network device and a terminal device or another network element. The network device may further include a memory. The memory is configured to be coupled to the processor, and stores a program instruction and data that are necessary for the network device.

According to another aspect, an embodiment of the present invention provides a communications system. The system includes the terminal device and the network device described in the foregoing aspects.

According to still another aspect, an embodiment of the present invention provides a computer storage medium, configured to store a computer software instruction used by the foregoing terminal device. The computer software instruction includes a program designed for performing the foregoing aspects.

According to still another aspect, an embodiment of the present invention provides a computer storage medium, configured to store a computer software instruction used by the foregoing network device. The computer software instruction includes a program designed for performing the foregoing aspects.

### DESCRIPTION OF DRAWINGS

FIG. 1 is a schematic diagram of a PUCCH format 1/1a/1b;
FIG. 2 is a schematic diagram of a PUCCH format 3;
FIG. 3 is a schematic diagram of an application scenario of a solution according to an embodiment of the present invention;
FIG. 4 is a schematic communication diagram of a method for sending and detecting control information according to an embodiment of the present invention;
FIG. 5 is a schematic communication diagram of another method for sending and detecting control information according to an embodiment of the present invention;
FIG. 6 is a schematic communication diagram of still another method for sending and detecting control information according to an embodiment of the present invention;
FIG. 7 is a schematic structural diagram of a terminal device according to an embodiment of the present invention;
FIG. 8 is a schematic structural diagram of another terminal device according to an embodiment of the present invention;
FIG. 9 is a schematic structural diagram of a network device according to an embodiment of the present invention; and
FIG. 10 is a schematic structural diagram of another network device according to an embodiment of the present invention.

### DESCRIPTION OF EMBODIMENTS

To make the purpose, technical solutions, and advantages of the embodiments of the present invention clearer, the following describes the technical solutions of the embodiments of the present invention with reference to the accompanying drawings in the embodiments of the present invention.

The embodiments of the present invention provide a method for sending control information and a method for detecting control information. The methods may be applied to a wireless communications system, for example, a global system for mobile communications (global system for mobile communication, GSM), a code division multiple access (code division multiple access, CDMA) system, a wideband code division multiple access (wideband code division multiple access, WCDMA) system, a general packet radio service (general packet radio service, GPRS) system, or a universal mobile telecommunications system (universal mobile telecommunications system, UMTS), and are especially applied to an LTE system, an evolution system of the LTE system, and a 5G wireless communications system.

FIG. 3 shows an application scenario to which a solution according to an embodiment of the present invention may be applied. The scenario includes a network device 301, and a terminal device 302 and a terminal device 303 that fall within a coverage area of the network device 301 and that communicate with the network device 301. The network device 301 is an evolved NodeB in an LTE system, and the terminal devices 302 and 303 are corresponding terminal devices in the LTE system. Both the network device 301 and the terminal device 302 are devices supporting short-TTI transmission, and the terminal device 303 is a device that does not support short-TTI transmission. The network device 301 may use a short TTI or a normal TTI of 1 ms to communicate with the terminal device 302. The network device 301 may use a normal TTI of 1 ms to communicate with the terminal device 303.

A person skilled in the art may understand that the application scenario shown in FIG. 3 is merely an example for describing application scenarios of the embodiments of the present invention, and is not intended to limit the application scenarios of the embodiments of the present invention.

The embodiments of the present invention mainly involve two types of network elements: a network device and a terminal device. The network device may be but is not limited to a base station. The two types of network elements may work on a licensed frequency band or an unlicensed frequency band.

Before specific embodiments are described, concepts such as a network device, a cell, a carrier, and a terminal device in the embodiments of the present invention are first briefly described.

In the embodiments of the present invention, a licensed frequency band and an unlicensed frequency band each may include one or more carriers. Carrier aggregation is performed on the licensed frequency band and the unlicensed frequency band. This may include that one or more carriers included in the licensed frequency band and one or more carriers included in the unlicensed frequency band are aggregated.

The cell mentioned in the embodiments of the present invention may be a cell corresponding to a base station. For example, the cell may belong to a macro base station, or may belong to a base station corresponding to a small cell (small cell). Small cells herein may include a metro cell (metro cell), a micro cell (micro cell), a pico cell (pico cell), a femto cell (femto cell), and the like. The small cells are characterized by a small coverage area and low transmit power, and are applicable to providing high-rate data transmission services.

On a carrier in an LTE system, a plurality of cells may work on a same frequency. In some special scenarios, it may also be considered that concepts of the carrier and the cell are equivalent in the LTE system. For example, in a carrier aggregation (carrier aggregation, CA) scenario, when a secondary component carrier is configured for UE, both a carrier index of the secondary component carrier and a cell identity (cell identity, Cell ID) of a secondary cell working on the secondary component carrier are carried. In this case, it may be considered that the concepts of the carrier and the cell are equivalent. For example, that UE accesses a carrier is equivalent to that UE accesses a cell.

The terminal device mentioned in the embodiments of the present invention includes user equipment (user equipment, UE), a mobile station (mobile station, MS), a mobile terminal (mobile terminal), and the like. The terminal device may communicate with one or more core networks by using a radio access network (radio access network, RAN). For example, the terminal device may be a mobile phone (or referred to as a "cellular" phone) or a computer with a mobile terminal. Alternatively, the terminal device may be a portable, pocket-size, handheld, computer built-in, or in-vehicle mobile apparatus, or a terminal device in a future 5G network, and the terminal device exchanges voice or data with the radio access network. The terminal device may further include a relay (Relay), and the terminal device may further include a terminal device in an NR new generation (new generation) wireless communications system. A device that can perform data communication with a base station may also be considered as a terminal device. In the embodiments of the present invention, UE in a general sense is used for description.

In addition, the network device mentioned in the embodiments of the present invention includes an evolved NodeB (evolvedNodeB, eNB or eNodeB), a macro base station, a micro base station (also referred to as a "small cell"), a picocell base station, an access point (Access Point, AP), or a transmission point (transmission point, TP) in the long term evolution (Long Term Evolution, LTE) system or a licensed-assisted access using long term evolution (licensed-assisted access using long term evolution, LAA-LTE) system, or a gNodeB (new generation NodeB, new generation NodeB) in an NR system, or the like.

### 1. Time domain

In the embodiments of the present invention, a resource used by the network device and the terminal device to transmit an uplink control channel may be divided into a plurality of time units in time domain.

In addition, in the embodiments of the present invention, the plurality of time units may be consecutive, or a preset interval may be set between some adjacent time units. This is not specially limited in the embodiments of the present invention.

In the embodiments of the present invention, a length of one time unit may be randomly set, and is not specially limited in the embodiments of the present invention.

For example, one time unit may include one or more subframes; or
one time unit may include one or more slots; or
one time unit may include one or more mini-slots; or
one time unit may include one or more symbols; or
one time unit may include one or more transmission time intervals (transmission time interval, "TTI"); or
one time unit may include one or more short transmission time intervals (short transmission time interval, "sTTI"); or
one time unit may correspond to one time mode. For example, a first time mode corresponds to a transmission time interval of two symbols or three symbols, and a second mode corresponds to a transmission time interval of seven symbols.

The mini-slot includes one or more symbols, and the mini-slot is less than or equal to the slot. The slot herein may be a mini-slot in a 60 KHz subcarrier spacing system, or may be a mini-slot in a 15 KHz subcarrier spacing system. This is not limited in the embodiments of the present invention.

The slot includes one or more symbols, and the slot herein may be a slot in the 60 KHz subcarrier spacing system, or may be a slot in the 15 KHz subcarrier spacing system. This is not limited in the embodiments of the present invention.

The TTI is a commonly used parameter in a current communications system (for example, the LTE system), and is a scheduling unit for scheduling data transmission on a radio link. In the prior art, it is generally considered that one TTI is 1 ms. In other words, one TTI is one subframe (subframe) or two slots (slot). The TTI is a basic unit for managing time in radio resource management (for example, scheduling).

In a communications network, a latency is a key performance indicator, and also affects user experience. With development of a communication protocol, a physical layer scheduling interval that affects the latency most becomes shorter. A scheduling interval is 10 ms in initial WCDMA, a scheduling interval is shortened to 2 ms in high speed packet access (high-speed packet access, "HSPA"), and a time interval (namely, a TTI) is shortened to 1 ms in long term evolution (Long Term Evolution, LTE).

Due to a low-latency service requirement, a frame structure of a shorter TTI needs to be introduced to a physical layer, to further shorten a scheduling interval and improve user experience. For example, a TTI length in the LTE system may be shortened from 1 ms to between one symbol (symbol) and one slot (including seven symbols). The symbol mentioned above may be an orthogonal frequency division multiplexing (Orthogonal Frequency Division Multiplexing, "OFDM") symbol or a single carrier frequency division multiple access (Single Carrier-Frequency Division Multiple Access, "SC-FDMA") symbol in the LTE system, or may be a symbol in another communications system. For another example, a length of a transmission unit in a 5G communications system is also less than or equal to 1 ms.

In the LTE system, in data transmission based on a TTI with a length of 1 ms, generally, a round trip time (round-trip time, "RTT") of data transmission is 8 ms. It is assumed that, compared with existing scheduling of the TTI with the length of 1 ms, a processing time is shortened in an equal proportion. In other words, an existing RTT latency is still followed. Therefore, in data transmission based on an sTTI with a length of 0.5 ms, an RTT of data transmission is 4 ms, and a latency can be shortened by half compared with a latency in data transmission based on the TTI with the length of 1 ms, thereby improving user experience.

A TTI with a length less than 1 ms may be referred to as an sTTI. For example, in the LTE system, a length of the sTTI may be any one length of one symbol to seven symbols, or a length of the sTTI may be a combination of at least two different lengths of one symbol to seven symbols. For example, 1 ms includes six sTTIs, and lengths of the sTTIs may be three symbols, two symbols, two symbols, two symbols, two symbols, and three symbols respectively; or 1 ms includes four sTTIs, and lengths of the sTTIs may be three symbols, four symbols, three symbols, and four symbols respectively. Alternatively, lengths of the sTTIs may be another combination of different lengths.

In addition, a length of an uplink sTTI may be the same as a length of a downlink sTTI. For example, the length of the uplink sTTI and the length of the downlink sTTI each are two symbols.

Alternatively, a length of an uplink sTTI may be greater than a length of a downlink sTTI. For example, the length of the uplink sTTI is seven symbols, and the length of the downlink sTTI is two symbols.

Alternatively, a length of an uplink sTTI may be less than a length of a downlink sTTI. For example, the length of the uplink sTTI is four symbols, and the length of the downlink sTTI is one subframe.

A data packet with a TTI length less than one subframe or 1 ms is referred to as a short TTI data packet. Short-TTI data transmission may be continuously distributed, or may be discontinuously distributed in frequency domain. It should be noted that, considering backward compatibility, data transmission based on the TTI with the length of 1 ms and data transmission based on the sTTI may coexist in a system.

In the embodiments of the present invention, an sTTI and a TTI (for example, a TTI with a length of 1 ms or with a length greater than 1 ms) specified in the prior art (for example, the LTE system) may be collectively referred to as a TTI. In addition, in the embodiments of the present invention, a length of the TTI may be changed based on an actual requirement.

It should be understood that the foregoing listed time unit structures are merely examples for description, and a time unit structure is not specially limited in the embodiments of the present invention, and may be randomly changed based on an actual requirement. For example, for an LTE system that does not support an sTTI (whose length is two symbols, three symbols, seven symbols, or one slot), one time unit may be one subframe (subframe).

For another example, for an LTE system that supports an sTTI (whose length is two symbols, three symbols, seven symbols, or one slot), one time unit may include one sTTI, or one time unit may include one slot (slot), or one time unit may include one or more symbols (for example, a quantity of symbols is a positive integer less than 7 or a positive integer less than 6), or one time unit may be one subframe.

It should be noted that, in the embodiments of the present invention, a length for information transmission (or information transmission duration) on a time unit may be 1 ms, or may be less than 1 ms. In other words, in combination with the foregoing description, even for the LTE system that does not support an sTTI (whose length is two symbols, three symbols, seven symbols, or one slot), when a time unit is represented by a subframe, a length for downlink information transmission on the time unit may be 1 ms, or may be less than 1 ms. Likewise, a length for uplink information transmission on the time unit may be 1 ms, or may be less than 1 ms.

For ease of understanding and description, as an example instead of a limitation, the following describes in detail a reference signal transmission process in the embodiments of the present invention by using a case in which one time unit includes one sTTI, and one sTTI includes two symbols as an example.

In addition, in the embodiments of the present invention, a resource used by the network device and the terminal device to transmit information may be divided into a plurality of time periods in time domain, and each time period includes one or more time units.

As an example instead of a limitation, in the embodiments of the present invention, one time period may be 1 ms or 10 ms. In the embodiments of the present invention, one time period may include, for example, six time units or two time units.

### 2. Frequency domain

In the embodiments of the present invention, a resource used by the network device and the terminal device to transmit an uplink control channel may be divided into a plurality of frequency domain units in frequency domain.

In addition, in the embodiments of the present invention, the plurality of frequency domain units may be consecutive, or a preset interval may be set between some adjacent frequency domain units. This is not specially limited in the embodiments of the present invention. For example, the preset interval is one frequency domain unit, three frequency domain units, five frequency domain units, or 1+2y frequency domain units, where y is an integer.

In the embodiments of the present invention, a size of one frequency domain unit may be randomly set, and is not specially limited in the embodiments of the present invention. For example, one frequency domain unit may include one or more subcarriers. One subcarrier is 15 KHz or is an integer multiple of 15 KHz in frequency domain.

### 3. Code domain

In the embodiments of the present invention, a resource used by the network device and the terminal device to transmit an uplink control channel may be divided into a plurality of cyclic shift sequences and/or orthogonal sequences in code domain.

On one frequency domain unit and time unit, a value of a quantity of cyclic shift sequences is 0 to 11.

In the embodiments of the present invention, on a same frequency domain unit and time unit, different cyclic shift sequences and/or orthogonal sequences may correspond to different uplink control channels.

### 4. sPUCCH format

In the embodiments of the present invention, an sPUCCH format is at least one of 1, 1a, 1b, 2, 3, 4, and 5.

In the embodiments of the present invention, when the sPUCCH format is at least one of 1, 1a, 1b, and 2, the sPUCCH format is demodulated based on a demodulation reference signal DMRS, and a modulation symbol is multiplied by a cyclic shift sequence. A time unit on which an sPUCCH in the format is located is two symbols, three symbols, or one slot. It may be understood that when the sPUCCH format is demodulated based on a reference signal, and a modulation symbol is multiplied by a cyclic shift sequence, the sPUCCH format may be referred to as an sPUCCH format 1, an sPUCCH format 1a, an sPUCCH format 1b, or an sPUCCH format 2.

In the embodiments of the present invention, when the sPUCCH format is at least one of 3, 4, and 5, the sPUCCH format is demodulated based on a demodulation reference signal DMRS, and a modulation symbol is multiplied by one or more resource elements REs, instead of being multiplied by a cyclic shift sequence. A time unit on which an sPUCCH in the format is located is two symbols, three symbols, or one slot. It may be understood that when the sPUCCH format is demodulated based on a demodulation reference signal DMRS, and a modulation symbol is multiplied by one or more resource elements REs, instead of being multiplied by a cyclic shift sequence, the sPUCCH may be referred to as an sPUCCH format 3, an sPUCCH format 4, or an sPUCCH format 5.

### 5. PUCCH format

In the embodiments of the present invention, a PUCCH format is at least one of 1, 1a, 1b, 3, 4, and 5, and is consistent with a PUCCH format defined in an LTE-A system. The PUCCH format is described in the background, and therefore is not described herein again.

6. HARQ-ACK message, including at least one of an acknowledgement (acknowledgement, ACK) message, a negative acknowledgement (negative acknowledgement NACK) message, and discontinuous transmission (discontinuous transmission, DTX).

In the embodiments of the present invention, an uplink control channel may also be referred to as a resource for carrying an uplink control channel, a resource for an uplink data channel carrying control information, a resource for a PUCCH, a resource for an sPUCCH, or a resource for an sPUSCH. The resource may be a resource in at least one of time domain, frequency domain, and code domain, and the resource may be used to carry an uplink control channel, a PUCCH, or an sPUCCH.

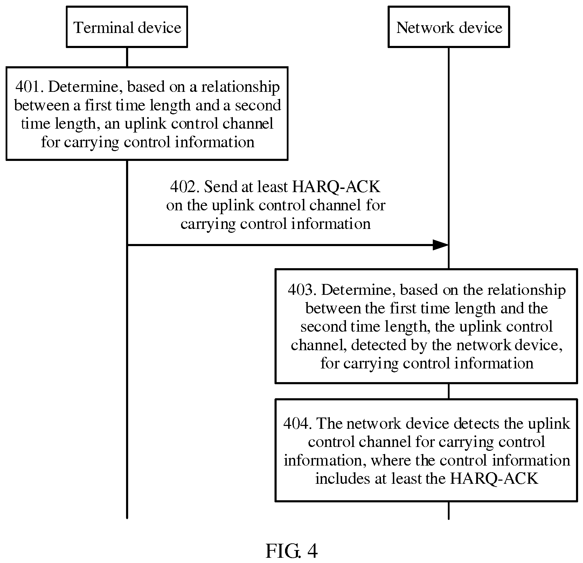

FIG. 4 is a schematic communication diagram of a method for sending and detecting control information according to an embodiment of the present invention. The method may be based on the application scenario shown in FIG. 3. A premise for the method may be determined as follows: An uplink control channel that may be used for a terminal device to carry an SR on a current time unit corresponds to only one time length; and/or an uplink control channel for carrying a HARQ-ACK message and an uplink control channel for carrying an SR overlap in terms of time; and/or a format of the uplink control channel for carrying a HARQ-ACK message is an sPUCCH format 1, an sPUCCH format 1a, an sPUCCH format 1b, an sPUCCH format 2, a PUCCH format 1, a PUCCH format 1a, or a PUCCH format 1b; and/or a service priority corresponding to the HARQ-ACK message is higher than or equal to a service priority corresponding to the SR, or a latency requirement of a downlink data service corresponding to the HARQ-ACK message is higher than or equal to a latency requirement of an uplink data service corresponding to the SR. The terminal device may be the terminal device 302 in the application scenario shown in FIG. 3. The terminal device 302 supports both a TTI of 1 ms (one subframe) and an sTTI (whose length is two symbols, three symbols, seven symbols, or one slot). Referring to FIG. 4, the method includes the following steps.

Step 401: The terminal device determines, based on a relationship between a first time length and a second time length, an uplink control channel for carrying control information.

In this embodiment of the present invention, the uplink control channel for carrying control information is a first uplink control channel or a second uplink control channel, the first time length is a time length corresponding to the first uplink control channel, the second time length is a time length corresponding to the second uplink control channel, the first uplink control channel is used to carry a HARQ-ACK message, and the second uplink control channel is used to carry an SR.

The first uplink control channel and the second uplink control channel may be distinguished from each other in one or more of time domain, frequency domain, and code domain.

Optionally, the first uplink control channel is a PUCCH, and the second uplink control channel is an sPUCCH or an sPUSCH. The first time length is a time length corresponding to the PUCCH. For example, the first time length is 1 ms or one subframe. The second time length is a time length corresponding to the sPUCCH or the sPUSCH. For example, the second time length is two symbols, three symbols, seven symbols, or one slot.

Optionally, the first uplink control channel is an sPUCCH or an sPUSCH, and the second uplink control channel is a PUCCH. The first time length is a time length corresponding to the sPUCCH or the sPUSCH. For example, the first time length is two symbols, three symbols, seven symbols, or one slot. The second time length is a time length corresponding to the PUCCH. For example, the second time length is 1 ms or one subframe.

Optionally, the first uplink control channel is a PUCCH, and the second uplink control channel is a PUCCH. The first time length is a time length corresponding to the PUCCH, and the second time length is a time length corresponding to the PUCCH. For example, the first time length and the second time length each are 1 ms or one subframe.

Optionally, the first uplink control channel is an sPUCCH or an sPUSCH, and the second uplink control channel is an sPUCCH or an sPUSCH. The first time length is a time length corresponding to the sPUCCH or the sPUSCH, and the second time length is a time length corresponding to the sPUCCH or the sPUSCH. For example, the first time length and the second time length each are two symbols, three symbols, seven symbols, or one slot.

Optionally, the terminal device determines that the first uplink control channel is used to carry a HARQ-ACK message. Optionally, the terminal device determines a format of the first uplink control channel based on a quantity of bits of a to-be-transmitted HARQ-ACK message. For example, when the first uplink control channel is a PUCCH, if the quantity of bits of the to-be-transmitted HARQ-ACK message is less than or equal to 2, the first uplink control channel is a PUCCH 1a or a PUCCH 1b; if the quantity of bits of the to-be-transmitted HARQ-ACK message is greater than 2 and less than or equal to 4, the first uplink control channel is a PUCCH 1b; if the quantity of bits of the to-be-transmitted HARQ-ACK message is greater than 4 and less than or equal to 22, the first uplink control channel is a PUCCH 3; or if the quantity of bits of the to-be-transmitted HARQ-ACK message is greater than 22, the first uplink control channel is a PUCCH 4 or a PUCCH 5. For another example, when the first uplink control channel is an sPUCCH, if the quantity of bits of the to-be-transmitted HARQ-ACK message is less than or equal to 2, the first uplink control channel is an sPUCCH 1, an sPUCCH 1a, an sPUCCH 1b, or an sPUCCH 2; or if the quantity of bits of the to-be-transmitted HARQ-ACK message is greater than 2, the first uplink control channel is an sPUCCH 3, an sPUCCH 4, or an sPUCCH 5.

The first uplink control channel is used to carry a HARQ-ACK message. The terminal device determines the format of the first uplink control channel based on the quantity of bits of the to-be-transmitted HARQ-ACK message.

Optionally, the terminal device determines that the second uplink control channel is used to carry an SR. Optionally, the terminal device determines a format of the second uplink control channel based on the second time length. For example, when the second uplink control channel is a PUCCH, the first uplink control channel is a PUCCH 1. For another example, when the second uplink control channel is an sPUCCH, the second uplink control channel is an sPUCCH 1, an sPUCCH 1a, an sPUCCH 1b, or an sPUCCH 2.

The first time length is a time length of a time domain resource on which the first uplink control channel is located. The second time length is a time length of a time domain resource on which the second uplink control channel is located.

For example, when the first time length is equal to the second time length, the terminal device determines that the uplink control channel for carrying control information is the second uplink control channel. For example, both the first uplink control channel and the second uplink control channel are PUCCHs, the first time length is equal to the second time length, and the first time length and the second time length each are 1 ms or one subframe; or both the first uplink control channel and the second uplink control channel are sPUCCHs, and the first time length is equal to the second time length, for example, the first time length and the second time length each are two symbols, three symbols, seven symbols, or one slot; or the first uplink control channel is an sPUSCH and the second uplink control channel is an sPUCCH, and the first time length is equal to the second time length, for example, the first time length and the second time length each are two symbols, three symbols, seven symbols, or one slot; or the first uplink control channel is an sPUCCH and the second uplink control channel is an sPUSCH, and the first time length is equal to the second time length, for example, the first time length and the second time length each are two symbols, three symbols, seven symbols, or one slot.

Optionally, the terminal device determines, based on a case in which the first time length is less than or equal to the second time length, that the uplink control channel for carrying control information is the second uplink control channel.

For another example, when the first time length is unequal to the second time length, the terminal device determines that the uplink control channel for carrying control information is the first uplink control channel. For example, when the first uplink control channel is a PUCCH and the second uplink control channel is an sPUSCH or an sPUCCH, the first time length is 1 ms, the second time length is two symbols, three symbols, seven symbols, or one slot, and the first time length is unequal to the second time length, the terminal device determines that the uplink control channel for carrying control information is the PUCCH; or when the first uplink control channel is an sPUSCH or an sPUCCH and the second uplink control channel is a PUCCH, the first time length is two symbols, three symbols, seven symbols, or one slot, the second time length is 1 ms, and the first time length is unequal to the second time length, the terminal device determines that the uplink control channel for carrying control information is the sPUSCH or the sPUCCH.

Optionally, the terminal device determines, based on a case in which the first time length is less than or greater than the second time length, that the uplink control channel for carrying control information is the first uplink control channel.

Step 402: The terminal device sends at least the HARQ-ACK message on the uplink control channel for carrying control information.

For example, the terminal device sends the HARQ-ACK message and the SR on the uplink control channel for carrying control information. The uplink control channel for carrying control information is the second uplink control channel.

For example, when both the first uplink control channel and the second uplink control channel are PUCCHs, and in this case, the first time length is equal to the second time length, for example, the first time length and the second time length each are 1 ms or one subframe, the terminal device generates, based on a PUCCH format 1a or 1b, a second uplink control channel for carrying a HARQ-ACK message and an SR, and sends the second uplink control channel on a resource for the second uplink control channel; or when both the first uplink control channel and the second uplink control channel are sPUCCHs, and the first time length is equal to the second time length, for example, the first time length and the second time length each are two symbols, three symbols, seven symbols, or one slot, the terminal device generates, based on an sPUCCH format 1, 1a, or 1b, a second uplink control channel for carrying a HARQ-ACK message and an SR, and sends the second uplink control channel on a resource for the second uplink control channel; or when the first uplink control channel is an sPUSCH and the second uplink control channel is an sPUCCH, and the first time length is equal to the second time length, for example, the first time length and the second time length each are two symbols, three symbols, seven symbols, or one slot, the terminal device generates, based on an sPUCCH format 1, 1a, or 1b, a second uplink control channel for carrying a HARQ-ACK message and an SR, and sends the second uplink control channel on a resource for the second uplink control channel; or when the first uplink control channel is an sPUCCH and the second uplink control channel is an sPUSCH, and the first time length is equal to the second time length, for example, the first time length and the second time length each are two symbols, three symbols, seven symbols, or one slot, the terminal device generates an sPUSCH, and uses the sPUSCH to carry a HARQ-ACK message and an SR. For another example, when the first uplink control channel is an sPUSCH and the second uplink control channel is an sPUCCH, and the first time length is unequal to the second time length, for example, one time length is two symbols, and the other time length is three symbols, the terminal device generates, based on an sPUCCH format 1, 1a, or 1b, a second uplink control channel for carrying a HARQ-ACK message and an SR, and sends the second uplink control channel on a resource for the second uplink control channel; or when the first uplink control channel is an sPUCCH and the second uplink control channel is an sPUSCH, and the first time length is unequal to the second time length, for example, one time length is two symbols, and the other time length is three symbols, the sPUSCH is used to carry a HARQ-ACK message and an SR.

For another example, the terminal device sends the HARQ-ACK message on the uplink control channel for carrying control information. The uplink control channel for carrying control information is the first uplink control channel. For example, when the first uplink control channel is a PUCCH and the second uplink control channel is an sPUSCH or an sPUCCH, and the first time length is unequal to the second time length, for example, the first time length is 1 ms or one subframe, and the second time length is two symbols, three symbols, seven symbols, or one slot, the terminal device determines that the uplink control channel for carrying control information is the PUCCH; or when the first uplink control channel is an sPUSCH or an sPUCCH and the second uplink control channel is a PUCCH, and the first time length is unequal to the second time length, for example, the first time length is two symbols, three symbols, seven symbols, or one slot, and the second time length is 1 ms or one subframe, the terminal device determines that the uplink control channel for carrying control information is the sPUSCH or the sPUCCH; or when the first uplink control channel is an sPUSCH and the second uplink control channel is an sPUCCH, and the first time length is unequal to the second time length, for example, the first time length is two symbols or three symbols, and the second time length is seven symbols or one slot, the terminal device determines that the uplink control channel for carrying control information is the sPUSCH; or when the first uplink control channel is an sPUCCH and the second uplink control channel is an sPUSCH, and the first time length is unequal to the second time length, for example, the first time length is two symbols or three symbols, and the second time length is seven symbols or one slot, the terminal device determines that the uplink control channel for carrying control information is the sPUCCH.

For another example, the terminal device discards the SR, where the uplink control channel for carrying control information is the first uplink control channel; or the terminal device discards the SR, where the first time length is unequal to the second time length. For example, if to-be-sent control information includes a HARQ-ACK message and an SR, and the uplink control channel for carrying control information is the first uplink control channel, the terminal device discards the SR, and uses the first uplink control channel to carry the HARQ-ACK message; or if to-be-sent control information includes a HARQ-ACK message and an SR, and the first time length is unequal to the second time length, the terminal device discards the SR, and sends only the HARQ-ACK message.

Optionally, before step 402, it may be further determined whether the following condition is met: A service priority corresponding to the HARQ-ACK message is higher than or equal to a service priority corresponding to the SR, a latency requirement of a downlink data service corresponding to the HARQ-ACK message is higher than or equal to a latency requirement of an uplink data service corresponding to the SR, or a transmission error rate corresponding to the HARQ-ACK message is lower than or equal to a transmission error rate corresponding to the SR. When the condition is met, step 402 is performed.

Optionally, before step 402, it is first determined whether the service priority corresponding to the HARQ-ACK message is higher than or equal to the service priority corresponding to the SR. If a determining result is yes, step 402 is performed; or if a determining result is no, the terminal device sends at least the SR on the uplink control channel for carrying control information.

Optionally, before step 402, it is first determined whether the latency requirement of the downlink data service corresponding to the HARQ-ACK message is higher than or equal to the latency requirement of the uplink data service corresponding to the SR. If a determining result is yes, step 402 is performed; or if a determining result is no, the terminal device sends at least the SR on the uplink control channel for carrying control information.

Optionally, before step 402, it is first determined whether the transmission error rate corresponding to the HARQ-ACK message is lower than or equal to the transmission error rate corresponding to the SR. If a determining result is yes, step 402 is performed; or if a determining result is no, the terminal device sends at least the SR on the uplink control channel for carrying control information.

Optionally, a service priority of ultra-reliable and low latency communications (ultra-reliable and low latency communications, URLLC) is higher than a service priority corresponding to enhanced mobile broadband (enhanced mobile broadband, eMBB). For example, if a HARQ-ACK message corresponds to a URLLC service, and an SR corresponds to an eMBB service, a service priority corresponding to the HARQ-ACK message is higher than a service priority corresponding to the SR.

It should be noted that the latency requirement of the downlink data service may be a time value of successful transmission within a preset time or a value of a latency in a preset time range, where the time value and the value of the latency correspond to the downlink data service. For example, a latency requirement of transmission completion within a time of 1 ms is higher than a latency requirement of transmission completion within a time of 2 ms. For another example, a latency requirement within 10 ms is lower than a latency requirement within 2 ms.

It should be noted that the transmission error rate may be a transmission error rate corresponding to information. For example, an error rate of 10e-5 is lower than an error rate of 10e-3.

Optionally, the terminal device determines the service priority corresponding to the HARQ-ACK message or the latency requirement of the downlink data service corresponding to the HARQ-ACK message.

Optionally, the terminal device determines the service priority corresponding to the SR or a latency requirement of a downlink data service corresponding to the SR.

Optionally, before step 401, the method further includes: determining, by the terminal device, a format of the first uplink control channel; and/or determining, by the terminal device, a format of the second uplink control channel.

For example, the format of the first uplink control channel is 1a, 1b, or 2, or the format of the first uplink control channel is 1a or 1b; and/or the format of the second uplink control channel is 1, 1a, 1b, or 2, or the format of the second uplink control channel is 1, 1a, or 1b. The format of the second uplink control channel may be first configured as 1, and then, when both the HARQ-ACK message and the SR are to be sent, a second uplink control channel in a format of 1a, 1b, or 2 may be generated on a resource corresponding to the second uplink control channel.

Optionally, when the terminal device determines that the format of the first uplink control channel is 1a, 1b, or 2, the terminal device determines, based on the relationship between the first time length and the second time length, the uplink control channel for carrying control information. When the terminal device determines that the format of the first uplink control channel is 3, 4, or 5, the terminal device directly determines that the uplink control channel for carrying control information is the first uplink control channel. For example, 1a is an sPUCCH format 1a, 1b is an sPUCCH format 1b, 2 is an sPUCCH format 2, 3 is an sPUCCH format 3, 4 is an sPUCCH format 4, and 5 is an sPUCCH format 5.

Optionally, when the terminal device determines that the format of the first uplink control channel is 1a or 1b, the terminal device determines, based on the relationship between the first time length and the second time length, the uplink control channel for carrying control information. When the terminal device determines that the format of the first uplink control channel is 3, 4, or 5, the terminal device directly determines that the uplink control channel for carrying control information is the first uplink control channel. For example, 1a is a PUCCH format 1a, 1b is a PUCCH format 1b, 3 is a PUCCH format 3, 4 is a PUCCH format 4, and 5 is a PUCCH format 5.

Optionally, when the terminal device determines that the format of the second uplink control channel is 1, 1a, or 1b, the terminal device determines, based on the relationship between the first time length and the second time length, the uplink control channel for carrying control information. When the terminal device determines that the format of the first uplink control channel is 3, 4, or 5, the terminal device directly determines that the uplink control channel for carrying control information is the first uplink control channel. For example, 1 is an sPUCCH format 1, 1a is an sPUCCH format 1a, 1b is an sPUCCH format 1b, 3 is an sPUCCH format 3, 4 is an sPUCCH format 4, and 5 is an sPUCCH format 5.

Optionally, when the terminal device determines that the format of the second uplink control channel is 1, 1a, or 1b, the terminal device determines, based on the relationship between the first time length and the second time length, the uplink control channel for carrying control information. When the terminal device determines that the format of the first uplink control channel is 3, 4, or 5, the terminal device directly determines that the uplink control channel for carrying control information is the first uplink control channel. For example, 1 is a PUCCH format 1, 1a is a PUCCH format 1a, 1b is a PUCCH format 1b, 3 is a PUCCH format 3, 4 is a PUCCH format 4, and 5 is a PUCCH format 5.

Optionally, before step 401, the terminal device determines the first time length based on higher layer signaling sent by a network device or a time length corresponding to downlink transmission; and/or the terminal device determines the second time length based on higher layer signaling sent by the network device.

Optionally, the first time length is equal to the time length corresponding to the downlink transmission. For example, if the time length corresponding to the downlink transmission is two symbols, the first time length is two symbols.

Optionally, the first time length is preset, and/or the second time length is preset.

For example, the first uplink control channel and the second uplink control channel overlap in terms of time.

Optionally, when the first uplink control channel and the second uplink control channel overlap in terms of time, the terminal device determines, based on the relationship between the first time length and the second time length, the uplink control channel for carrying control information; or otherwise, the terminal device directly determines that the uplink control channel for carrying control information is the first uplink control channel or the second uplink control channel, without performing determining based on the relationship between the first time length and the second time length.

Optionally, a transmit time difference between the first uplink control channel and the second uplink control channel is less than or equal to a µs, where a is a predefined value, and a is a non-negative integer. Optionally, when the transmit time difference between the first uplink control channel and the second uplink control channel is less than or equal to a µs, the terminal device determines, based on the relationship between the first time length and the second time length, the uplink control channel for carrying control information; or otherwise, the terminal device directly determines that the uplink control channel for carrying control information is the first uplink control channel or the second uplink control channel, without performing determining based on the relationship between the first time length and the second time length.

Optionally, an overlap time between the first uplink control channel and the second uplink control channel is greater than or equal to b µs, where b is a predefined value, and b is a non-negative integer. Optionally, when the overlap time between the first uplink control channel and the second uplink control channel is greater than or equal to b µs, the terminal device determines, based on the relationship between the first time length and the second time length, the uplink control channel for carrying control information; or otherwise, the terminal device directly determines that the uplink control channel for carrying control information is the first uplink control channel or the second uplink control channel, without performing determining based on the relationship between the first time length and the second time length.

For example, if the format of the first uplink control channel is 1a, 1b, or 2, the solution in this embodiment of the present invention is executed; or if the format of the first uplink control channel is 3, 4, or 5, the solution in this embodiment of the present invention is not executed, and the terminal device sends the HARQ-ACK message and the SR on the first uplink control channel.

Optionally, the first uplink control channel and the second uplink control channel are uplink control channels on a same carrier, or the first uplink control channel and the second uplink control channel are uplink control channels on a same carrier group.

Optionally, the terminal device determines that the first uplink control channel and the second uplink control channel are uplink control channels on a same carrier or carrier group. It should be noted that if the first uplink control channel and the second uplink control channel are uplink control channels that are not on a same carrier, or the first uplink control channel and the second uplink control channel are uplink control channels that are not on a same carrier group, the terminal device may send both the first uplink control channel and the second uplink control channel, and perform neither step 401 nor step 402, because in this case, an uplink carrier characteristic is not damaged.

It should be noted that the first uplink control channel is used to carry a HARQ-ACK message, and the second uplink control channel is used to carry an SR. It may be understood that the first uplink control channel is an uplink control channel corresponding to the HARQ-ACK message, and the second uplink control channel is an uplink control channel corresponding to the SR. If a HARQ-ACK message and an SR do not need to be sent in a same time period, the terminal device sends a HARQ on the first uplink control channel, or sends an SR on the second uplink control channel. If a HARQ-ACK message and an SR are to be sent in a same time period, and an optional solution in this embodiment of the present invention is met, the second uplink control channel carries both the SR and the HARQ-ACK message, indicated by the following: The HARQ-ACK message is sent on the second uplink control channel, and sending of the second uplink channel implicitly indicates that the terminal device sends the SR in this case. If a HARQ-ACK message and an SR are to be sent in a same time period, and an optional solution in this embodiment of the present invention is met, the first uplink control channel carries both the SR and the HARQ-ACK message. Therefore, the first uplink control channel may be used to transmit only a HARQ-ACK message, or transmit both HARQ-ACK information and an SR. The second uplink control channel may be used to transmit only an SR, or transmit both HARQ-ACK information and an SR.

Optionally, the first uplink control channel may be indicated based on downlink control information DCI, or may be determined based on a resource carrying downlink control information, or may be determined based on higher layer signaling. The second uplink control channel is predefined, notified by using higher layer signaling, or indicated based on downlink control information (downlink control information, DCI).

In this embodiment of the present invention, not only the uplink single-carrier characteristic can be maintained, but also the HARQ-ACK message can be first transmitted. The terminal device determines, by determining the relationship between the first time length corresponding to the first uplink control channel and the second time length corresponding to the second uplink control channel, for example, determining whether the first time length is equal to or the same as the second time length, to send the uplink control channel for carrying control information. When the first time length is the same as the second time length, the terminal device selects a resource corresponding to the second uplink control channel to send the HARQ-ACK message and the SR; or when the first time length is different from the second time length, the terminal device selects a resource corresponding to the first uplink control channel to send the HARQ-ACK message. Therefore, the terminal device is prevented from sending two channels with different TTI lengths, and the uplink single-carrier characteristic is prevented from being damaged, so that important information can be correctly transmitted while costs of the terminal device are reduced.

Step 403: The network device determines, based on a relationship between a first time length and a second time length, an uplink control channel, detected by the network device, for carrying control information.

The uplink control channel for carrying control information is at least one of a first uplink control channel and a second uplink control channel, the first time length is a time length corresponding to the first uplink control channel, the second time length is a time length corresponding to the second uplink control channel, the first uplink control channel is used to carry a HARQ-ACK message, and the second uplink control channel is used to carry an SR. Optionally, when the first time length is equal to the second time length, the network device determines that the uplink control channel, detected by the network device, for carrying control information is the first uplink control channel and the second uplink control channel. When the first time length is equal to the second time length, and to-be-transmitted information includes only a HARQ-ACK message but does not include an SR, the terminal device uses the first uplink control channel to carry the HARQ-ACK message; or when to-be-transmitted information includes a HARQ-ACK message and an SR, the terminal device uses the second uplink control channel to carry the HARQ-ACK message and the SR. To cover the foregoing two cases, when the first time length is equal to the second time length, the network device needs to detect both the first uplink control channel and the second uplink control channel.

Optionally, when the first time length is unequal to the second time length, for example, one time length is two symbols, and the other time length is three symbols, the network device determines that the uplink control channel, detected by the network device, for carrying control information is the first uplink control channel and the second uplink control channel. When the first time length is equal to the second time length, and to-be-transmitted information includes only a HARQ-ACK message but does not include an SR, the terminal device uses the first uplink control channel to carry the HARQ-ACK message; or when to-be-transmitted information includes a HARQ-ACK message and an SR, the terminal device uses the second uplink control channel to carry the HARQ-ACK message and the SR. To cover the foregoing two cases, when the first time length is equal to the second time length, the network device needs to detect both the first uplink control channel and the second uplink control channel.

Optionally, the network device determines, based on a case in which the first time length is less than or equal to the second time length, that the uplink control channel, detected by the network device, for carrying control information is the first uplink control channel and the second uplink control channel.

For another example, when the first time length is unequal to the second time length, the network device determines that the uplink control channel, detected by the network device, for carrying control information is the first uplink control channel. The first time length is unequal to the second time length, and the terminal device uses the first uplink control channel to carry the HARQ-ACK message. Therefore, the network device needs to detect only the first uplink control channel but does not need to detect the second uplink control channel.

Optionally, the network device determines, based on a case in which the first time length is less than or greater than the second time length, that the uplink control channel, detected by the network device, for carrying control information is the first uplink control channel.

Therefore, the network device determines that the uplink control channel, detected by the network device, for carrying control information is the first uplink control channel, and does not detect the second uplink control channel, to prevent the network device from detecting two channels with different TTI lengths, so that costs of the network device are reduced, and timely transmission of the HARQ-ACK message can be ensured.

Step 404: The network device detects the uplink control channel for carrying control information, where the control information includes at least the HARQ-ACK message.

Optionally, after step 404, the method includes: receiving, by the network device, the HARQ-ACK message and the SR on the uplink control channel for carrying control information, where the uplink control channel for carrying control information is the second uplink control channel.

Optionally, after step 404, the method includes: receiving, by the network device, the HARQ-ACK message on the uplink control channel for carrying control information, where the uplink control channel for carrying control information is the first uplink control channel. Optionally, the network device does not detect the second uplink control channel. The first time length is unequal to the second time length.

Optionally, a service priority corresponding to the HARQ-ACK message is higher than or equal to a service priority corresponding to the SR, or a latency requirement of a downlink data service corresponding to the HARQ-ACK message is higher than or equal to a latency requirement of an uplink data service corresponding to the SR.

Optionally, before step 403, the method includes: determining, by the network device, a format of the first uplink control channel; and/or determining, by the network device, a format of the second uplink control channel.

Optionally, the format of the first uplink control channel is 1a, 1b, or 2, or the format of the first uplink control channel is 1a or 1b; and/or the format of the second uplink control channel is 1, 1a, 1b, or 2, or the format of the second uplink control channel is 1, 1a, or 1b.

Optionally, the network device determines the first time length based on higher layer signaling or a time length corresponding to downlink transmission; and/or the network device determines the second time length based on higher layer signaling. The network device may further indicate the first time length and/or the second time length by using physical layer DCI.

Optionally, the first uplink control channel and the second uplink control channel overlap in terms of time. If the first uplink control channel and the second uplink control channel do not overlap in terms of time, no channel selection is involved. This case is unrelated to the solution, and therefore details are not described herein.

Optionally, the first uplink control channel and the second uplink control channel are uplink control channels on a same carrier, or the first uplink control channel and the second uplink control channel are uplink control channels on a same carrier group.

Optionally, the network device determines that the first uplink control channel and the second uplink control channel are uplink control channels on a same carrier or carrier group. It should be noted that if the first uplink control channel and the second uplink control channel are uplink control channels that are not on a same carrier, or the first uplink control channel and the second uplink control channel are uplink control channels that are not on a same carrier group, the network device directly determines that the uplink control channel, detected by the network device, for carrying control information is the first uplink control channel and the second uplink control channel.

Optionally, it may be considered that a time length of two symbols is equal to a time length of three symbols.

In addition, step 401 and step 402 are performed by the terminal device, and an occasion for performing the two steps is controlled by the terminal device. Step 403 and step 404 are performed by the network device, and an occasion for performing the two steps is controlled by the network device. Therefore, a sequence of performing step 401, step 402, step 403, and step 404 is not specifically limited in this embodiment of the present invention. The terminal device may perform step 401 and step 402 before the network device performs step 403 and step 404, or the network device may perform step 403 and step 404 before the terminal device performs step 401 and step 402, or the terminal device may perform step 401 and step 402 when the network device performs step 403 and step 404.

In this embodiment of the present invention, according to the technical solutions provided in this application, the network device determines, by determining the relationship between the first time length corresponding to the first uplink control channel and the second time length corresponding to the second uplink control channel, for example, determining whether the first time length is equal to or the same as the second time length, the uplink control channel, detected by the network device, for carrying control information. When the first time length is the same as the second time length, the network device determines that the uplink control channel, detected by the network device, for carrying control information is the first uplink control channel and the second uplink control channel, and the network device needs to blindly detect the two uplink control channels, so that timely transmission of the HARQ-ACK message and the SR can be ensured. When the first time length is different from the second time length, the network device determines that the uplink control channel, detected by the network device, for carrying control information is the first uplink control channel, to prevent the network device from detecting two channels with different TTI lengths, so that costs of the network device are reduced.

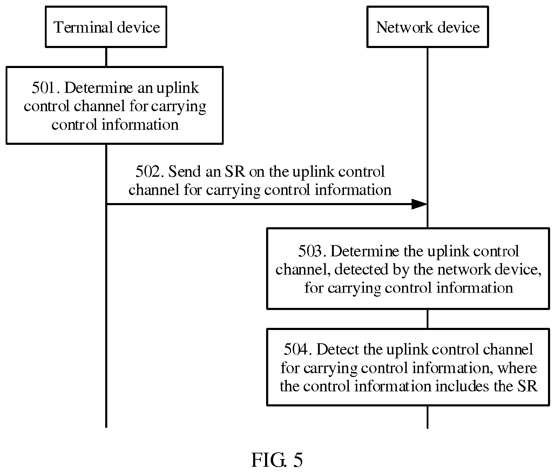

FIG. 5 is a schematic communication diagram of another method for sending and detecting control information according to an embodiment of the present invention. The method may be based on the application scenario shown in FIG. 3. A premise for the method may be that an uplink control channel used by a terminal device to send an SR has at least two different time lengths or has at least two uplink control channel resources with different time lengths. For example, two uplink control channels are used to send an SR, and include a PUCCH and an sPUCCH, and the two time lengths are a TTI such as 1 ms or one subframe and an sTTI such as two symbols, three symbols, seven symbols, or one slot. The terminal device may be the terminal device 302 in the application scenario shown in FIG. 3. The terminal device 302 supports both a TTI of 1 ms (one subframe) and an sTTI (whose length is two symbols, three symbols, seven symbols, or one slot). Referring to FIG. 5, the method includes the following steps.

Step 501: The terminal device determines an uplink control channel for carrying control information.

The uplink control channel for carrying control information is a third uplink control channel or a fourth uplink control channel, the third uplink control channel and the fourth uplink control channel are used to carry an SR, a time length corresponding to the third uplink control channel is a third time length, a time length corresponding to the fourth uplink control channel is a fourth time length, and the third time length is greater than the fourth time length. For example, the third uplink control channel is a PUCCH, and the fourth uplink control channel is an sPUCCH; or the third uplink control channel is a PUCCH, and the fourth uplink control channel is a PUCCH; or the third uplink control channel is an sPUCCH, and the fourth uplink control channel is an sPUCCH. A time length corresponding to the PUCCH is 1 ms or one subframe (denoted as a TTI), and a time length corresponding to the sPUCCH is two symbols, three symbols, seven symbols, or one slot (denoted as an sTTI).

For example, the terminal device determines, based on a time length corresponding to the uplink control channel for carrying control information, the uplink control channel for carrying control information. For example, the terminal device first determines that the time length corresponding to the uplink control channel for carrying control information is 1 ms or one subframe, and then determines that the uplink control channel for carrying control information is a PUCCH.

Optionally, the terminal device determines an uplink control channel with a shorter time length as the uplink control channel for carrying control information. For example, if the third time length is greater than the fourth time length, the terminal device determines the fourth uplink control channel as the uplink control channel for carrying control information.

Optionally, the terminal device determines an uplink control channel with a longer time length as the uplink control channel for carrying control information. For example, if the third time length is less than the fourth time length, the terminal device determines the fourth uplink control channel as the uplink control channel for carrying control information.

Optionally, the terminal device determines, based on a time length corresponding to the uplink control channel for carrying control information and higher layer signaling or a predefined rule, the uplink control channel for carrying control information.

For example, before step 501, the method further includes: determining, by the terminal device based on a time length corresponding to last downlink transmission, the time length corresponding to the uplink control channel for carrying control information, where for example, if the time length corresponding to the last downlink transmission is a TTI, the terminal device determines that the time length corresponding to the uplink control channel for carrying control information is a TTI; or determining, by the terminal device based on a time length corresponding to an uplink control channel for carrying a HARQ-ACK message, that the time length corresponding to the uplink control channel for carrying control information is an sTTI. For example, the terminal device determines, based on a time length corresponding to an uplink control channel for carrying a HARQ-ACK message last time, that the time length corresponding to the uplink control channel for carrying control information is an sTTI.

It should be noted that the terminal device determines, based on the time length corresponding to the last downlink transmission or the time length corresponding to the uplink control channel for carrying a HARQ-ACK message, the time length corresponding to the uplink control channel for carrying control information. The time length corresponding to the uplink control channel for carrying control information may be the time length corresponding to the last downlink transmission or the time length corresponding to the uplink control channel for carrying a HARQ-ACK message; or may be unequal to the time length corresponding to the last downlink transmission or the time length corresponding to the uplink control channel for carrying a HARQ-ACK message. For example, the time length corresponding to the uplink control channel for carrying a HARQ-ACK message is two symbols, and the time length corresponding to the uplink control channel for carrying control information is three symbols; or the time length corresponding to the last downlink transmission is two symbols, and the time length corresponding to the uplink control channel for carrying control information is three symbols; or vice versa.

Optionally, it may be considered that a time length of two symbols is equal to a time length of three symbols.

For example, the terminal device determines that the uplink control channel for carrying control information is the fourth uplink control channel, and the fourth uplink control channel and an uplink channel other than the third uplink control channel do not overlap in terms of time, in other words, a channel for carrying an SR and a channel for carrying a HARQ-ACK message do not overlap in terms of time; or the terminal device determines that the uplink control channel for carrying control information is the fourth uplink control channel, and there is no downlink transmission on X time units preceding a time unit on which the third uplink control channel is located or there is no downlink transmission on Y time units preceding a time unit on which the four uplink control channel is located. The time unit may be a TTI or an sTTI.

For example, the terminal device determines that the uplink control channel for carrying control information is the fourth uplink control channel, and at least a part or all of the fourth uplink control channel and the third uplink control channel overlap in terms of time. A person skilled in the art may understand that, if the fourth uplink control channel and the third uplink control channel do not overlap in terms of time, no channel selection from the two channels is involved.

Step 502: The terminal device sends the SR on the uplink control channel for carrying control information.

In this embodiment of the present invention, it may be assumed that no HARQ-ACK message is currently to be sent.

In this embodiment of the present invention, not only an uplink single-carrier characteristic can be maintained, but also a suitable channel for carrying an SR can be selected, so that a probability of correct SR transmission is increased.

Step 503: A network device determines the uplink control channel, detected by the network device, for carrying control information.

The uplink control channel for carrying control information is at least one of a third uplink control channel and a fourth uplink control channel, the third uplink control channel and the fourth uplink control channel are used to carry an SR, a time length corresponding to the third uplink control channel is a third time length, a time length corresponding to the fourth uplink control channel is a fourth time length, and the third time length is greater than the fourth time length. For example, the third uplink control channel is a PUCCH, and the third time length is a TTI; and the fourth uplink control channel is an sPUCCH, and the fourth time length is an sTTI.

For example, the network device determines, based on a time length corresponding to the uplink control channel for carrying control information, the uplink control channel, detected by the network device, for carrying control information. For example, the network device first determines that the time length corresponding to the uplink control channel for carrying control information is a TTI, and then determines that the uplink control channel, detected by the network device, for carrying control information is a PUCCH.

Optionally, the network device determines an uplink control channel with a shorter time length as the uplink control channel for carrying control information. For example, if the third time length is greater than the fourth time length, the network device determines the fourth uplink control channel as the uplink control channel for carrying control information. Optionally, the network device determines an uplink control channel with a longer time length as the uplink control channel for carrying control information. For example, if the third time length is greater than the fourth time length, the network device determines the third uplink control channel as the uplink control channel for carrying control information.

Optionally, the network device determines, based on a time length corresponding to the uplink control channel for carrying control information and higher layer signaling or a predefined rule, the uplink control channel for carrying control information.

For example, before step 503, the method further includes: determining, by the network device based on a time length corresponding to last downlink transmission, the time length corresponding to the uplink control channel, detected by the network device, for carrying control information, so that the time length corresponding to the uplink control channel for carrying an SR is consistent with the time length corresponding to the last downlink transmission, where for example, if the time length corresponding to the last downlink transmission is a TTI, the network device determines that the time length corresponding to the uplink control channel, detected by the network device, for carrying control information is a TTI; or determining, by the network device based on a time length corresponding to an uplink control channel for carrying a HARQ-ACK message, the time length corresponding to the uplink control channel, detected by the network device, for carrying control information, so that the time length corresponding to the uplink control channel for carrying an SR is consistent with the time length corresponding to the uplink control channel for carrying a HARQ-ACK message. In this way, a corresponding uplink control channel can be correctly detected when the terminal device uses the uplink control channel for carrying an SR to carry a HARQ-ACK message. For example, if the time length corresponding to the uplink control channel for carrying a HARQ-ACK message is an sTTI, the network device determines that the time length corresponding to the uplink control channel for carrying an SR is an sTTI.

It should be noted that the network device determines, based on the time length corresponding to the last downlink transmission or the time length corresponding to the uplink control channel for carrying a HARQ-ACK message, the time length corresponding to the uplink control channel, detected by the network device, for carrying control information. The time length corresponding to the uplink control channel for carrying control information may be the time length corresponding to the last downlink transmission or the time length corresponding to the uplink control channel for carrying a HARQ-ACK message; or may be unequal to the time length corresponding to the last downlink transmission or the time length corresponding to the uplink control channel for carrying a HARQ-ACK message. For example, the time length corresponding to the uplink control channel for carrying a HARQ-ACK message is two symbols, and the time length corresponding to the uplink control channel for carrying control information is three symbols; or the time length corresponding to the last downlink transmission is two symbols, and the time length corresponding to the uplink control channel for carrying control information is three symbols; or vice versa.

For example, the network device determines that the uplink control channel, detected by the network device, for carrying control information is the fourth uplink control channel, and the fourth uplink control channel and an uplink channel other than the third uplink control channel do not overlap in terms of time, in other words, selection from only the third uplink control channel and the fourth uplink control channel is involved; or the network device determines that the uplink control channel, detected by the network device, for carrying control information is the fourth uplink control channel, and there is no downlink transmission on X time units preceding a time unit on which the third uplink control channel is located or there is no downlink transmission on Y time units preceding a time unit on which the fourth uplink control channel is located. In other words, when no time length corresponding to a downlink transmission channel is used as a reference, an uplink control channel with a shorter time length is selected to carry an SR.

For example, the network device determines that the uplink control channel, detected by the network device, for carrying control information is the fourth uplink control channel, and at least a part or all of the fourth uplink control channel and the third uplink control channel overlap in terms of time. A person skilled in the art may understand that, if the fourth uplink control channel and the third uplink control channel do not overlap in terms of time, no channel selection is involved.

Step 504: The network device detects the uplink control channel for carrying control information, where the control information includes the SR.

In this embodiment of the present invention, it may be assumed that no HARQ-ACK message is currently to be received.

In this embodiment of the present invention, not only an uplink single-carrier characteristic can be maintained, but also a suitable channel, detected by the network device, for carrying an SR can be selected, so that a probability of correct SR transmission is increased.

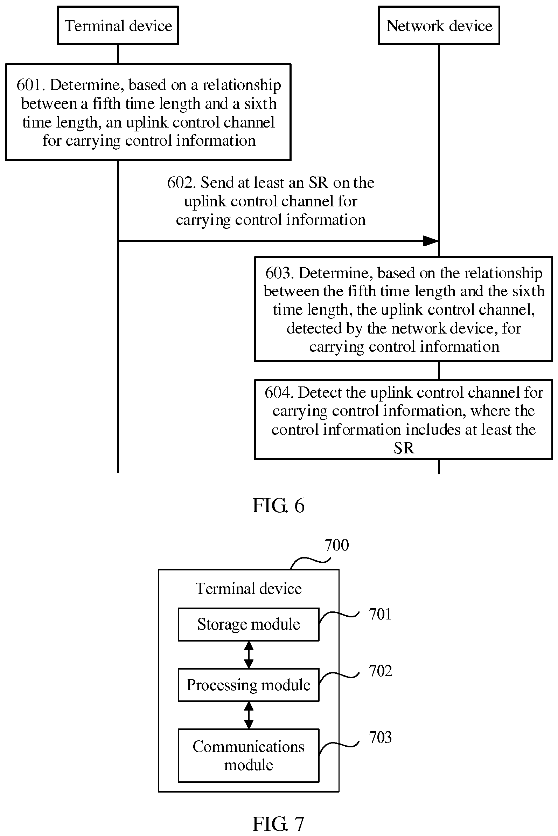

FIG. 6 is a schematic communication diagram of still another method for sending and detecting control information according to an embodiment of the present invention. A premise for the method may be determined as follows: An SR is relatively important information; and/or an uplink control channel that may be used for a terminal device to carry an SR on a current time unit corresponds to only one time length; and/or an uplink control channel for carrying a HARQ-ACK message and an uplink control channel for carrying an SR overlap in terms of time; and/or a service priority corresponding to the HARQ-ACK message is lower than a service priority corresponding to the SR, or a latency requirement of a downlink data service corresponding to the HARQ-ACK message is higher than a latency requirement of an uplink data service corresponding to the SR. The terminal device may be the terminal device 302 in the application scenario shown in FIG. 3. The terminal device 302 supports both a TTI of 1 ms (one subframe) and an sTTI (whose length is two symbols, three symbols, seven symbols, or one slot). Referring to FIG. 6, the method includes the following steps.

Step 601: The terminal device determines, based on a relationship between a fifth time length and a sixth time length, an uplink control channel for carrying control information.

The uplink control channel for carrying control information is a fifth uplink control channel or a sixth uplink control channel, the fifth time length is a time length corresponding to the fifth uplink control channel, the sixth time length is a time length corresponding to the sixth uplink control channel, the fifth uplink control channel is used to carry a HARQ-ACK message, and the sixth uplink control channel is used to carry an SR.

The fifth uplink control channel and the sixth uplink control channel may be distinguished from each other in one or more of time domain, frequency domain, and code domain.

Optionally, the fifth uplink control channel is a PUCCH, and the sixth uplink control channel is an sPUCCH or an sPUSCH. The fifth time length is a time length corresponding to the PUCCH. For example, the fifth time length is 1 ms or one subframe. The sixth time length is a time length corresponding to the sPUCCH or the sPUSCH. For example, the sixth time length is two symbols, three symbols, seven symbols, or one slot.

Optionally, the fifth uplink control channel is an sPUCCH or an sPUSCH, and the sixth uplink control channel is a PUCCH. The fifth time length is a time length corresponding to the sPUCCH or the sPUSCH. For example, the fifth time length is two symbols, three symbols, seven symbols, or one slot. The sixth time length is a time length corresponding to the PUCCH. For example, the sixth time length is 1 ms or one subframe.

Optionally, the fifth uplink control channel is a PUCCH, and the sixth uplink control channel is a PUCCH. The fifth time length is a time length corresponding to the PUCCH, and the sixth time length is a time length corresponding to the PUCCH. For example, the fifth time length and the sixth time length each are 1 ms or one subframe.

Optionally, the fifth uplink control channel is an sPUCCH or an sPUSCH, and the sixth uplink control channel is an sPUCCH or an sPUSCH. The fifth time length is a time length corresponding to the sPUCCH or the sPUSCH, and the sixth time length is a time length corresponding to the sPUCCH or the sPUSCH. For example, the fifth time length and the sixth time length each are two symbols, three symbols, seven symbols, or one slot.

Optionally, the terminal device determines that the fifth uplink control channel is used to carry the HARQ-ACK message. Optionally, the terminal device determines a format of the fifth uplink control channel based on a quantity of bits of a to-be-transmitted HARQ-ACK message. For example, when the fifth uplink control channel is a PUCCH, if the quantity of bits of the to-be-transmitted HARQ-ACK message is less than or equal to 2, the fifth uplink control channel is a PUCCH 1a or a PUCCH 1b; if the quantity of bits of the to-be-transmitted HARQ-ACK message is greater than 2 and less than or equal to 4, the fifth uplink control channel is a PUCCH 1b; if the quantity of bits of the to-be-transmitted HARQ-ACK message is greater than 4 and less than or equal to 22, the fifth uplink control channel is a PUCCH 3; or if the quantity of bits of the to-be-transmitted HARQ-ACK message is greater than 22, the fifth uplink control channel is a PUCCH 4 or a PUCCH 5. For another example, when the fifth uplink control channel is an sPUCCH, if the quantity of bits of the to-be-transmitted HARQ-ACK message is less than or equal to 2, the fifth uplink control channel is an sPUCCH 1, an sPUCCH 1a, an sPUCCH 1b, or an sPUCCH 2; or if the quantity of bits of the to-be-transmitted HARQ-ACK message is greater than 2, the fifth uplink control channel is an sPUCCH 3, an sPUCCH 4, or an sPUCCH 5.

The fifth uplink control channel is used to carry a HARQ-ACK message. The terminal device determines the format of the fifth uplink control channel based on the quantity of bits of the to-be-transmitted HARQ-ACK message.

Optionally, the terminal device determines that the sixth uplink control channel is used to carry the SR. Optionally, the terminal device determines a format of the sixth uplink control channel based on the sixth time length. For example, when the sixth uplink control channel is a PUCCH, the sixth uplink control channel is a PUCCH 1. For another example, when the sixth uplink control channel is an sPUCCH, the sixth uplink control channel is an sPUCCH 1, an sPUCCH 1a, an sPUCCH 1b, or an sPUCCH 2.

The fifth time length is a time length of a time domain resource on which the fifth uplink control channel is located. The sixth time length is a time length of a time domain resource on which the sixth uplink control channel is located.

For example, when the fifth time length is equal to the sixth time length, the terminal device determines that the uplink control channel for carrying control information is the sixth uplink control channel. For example, both the fifth uplink control channel and the sixth uplink control channel are PUCCHs, the fifth time length is equal to the sixth time length, and the fifth time length and the sixth time length each are 1 ms or one subframe; or both the fifth uplink control channel and the sixth uplink control channel are sPUCCHs, and the fifth time length is equal to the sixth time length, for example, the fifth time length and the sixth time length each are two symbols, three symbols, seven symbols, or one slot; or the fifth uplink control channel is an sPUSCH and the sixth uplink control channel is an sPUCCH, and the fifth time length is equal to the sixth time length, for example, the fifth time length and the sixth time length each are two symbols, three symbols, seven symbols, or one slot; or the fifth uplink control channel is an sPUCCH and the sixth uplink control channel is an sPUSCH, and the fifth time length is equal to the sixth time length, for example, the fifth time length and the sixth time length each are two symbols, three symbols, seven symbols, or one slot.

Optionally, the terminal device determines, based on a case in which the fifth time length is less than or equal to the sixth time length, that the uplink control channel for carrying control information is the sixth uplink control channel.

For another example, when the fifth time length is unequal to the sixth time length, the terminal device determines that the uplink control channel for carrying control information is the sixth uplink control channel. For example, when the fifth uplink control channel is a PUCCH and the sixth uplink control channel is an sPUSCH or an sPUCCH, the fifth time length is 1 ms, the sixth time length is two symbols, three symbols, seven symbols, or one slot, and the fifth time length is unequal to the sixth time length, the terminal device determines that the uplink control channel for carrying control information is the sPUSCH or the sPUCCH; or when the fifth uplink control channel is an sPUSCH or an sPUCCH and the sixth uplink control channel is a PUCCH, the fifth time length is two symbols, three symbols, seven symbols, or one slot, the sixth time length is 1 ms, and the fifth time length is unequal to the sixth time length, the terminal device determines that the uplink control channel for carrying control information is the PUCCH.

Optionally, the terminal device determines, based on a case in which the fifth time length is less than or greater than the sixth time length, that the uplink control channel for carrying control information is the sixth uplink control channel.

Step 602: The terminal device sends at least the SR on the uplink control channel for carrying control information.

For example, the terminal device sends the HARQ-ACK message and the SR on the uplink control channel for carrying control information. The uplink control channel for carrying control information is the sixth uplink control channel.

For example, when both the fifth uplink control channel and the sixth uplink control channel are PUCCHs, and in this case, the fifth time length is equal to the sixth time length, for example, the fifth time length and the sixth time length each are 1 ms or one subframe, the terminal device generates, based on a PUCCH format 1a or 1b, a sixth uplink control channel for carrying a HARQ-ACK message and an SR, and sends the sixth uplink control channel on a resource for the sixth uplink control channel; or when both the fifth uplink control channel and the sixth uplink control channel are sPUCCHs, and the fifth time length is equal to the sixth time length, for example, the fifth time length and the sixth time length each are two symbols, three symbols, seven symbols, or one slot, the terminal device generates, based on an sPUCCH format 1, 1a, or 1b, a sixth uplink control channel for carrying a HARQ-ACK message and an SR, and sends the sixth uplink control channel on a resource for the sixth uplink control channel; or when the fifth uplink control channel is an sPUSCH and the sixth uplink control channel is an sPUCCH, and the fifth time length is equal to the sixth time length, for example, the fifth time length and the sixth time length each are two symbols, three symbols, seven symbols, or one slot, the terminal device generates, based on an sPUCCH format 1, 1a, or 1b, a sixth uplink control channel for carrying a HARQ-ACK message and an SR, and sends the sixth uplink control channel on a resource for the sixth uplink control channel; or when the fifth uplink control channel is an sPUCCH and the sixth uplink control channel is an sPUSCH, and the fifth time length is equal to the sixth time length, for example, the fifth time length and the sixth time length each are two symbols, three symbols, seven symbols, or one slot, the terminal device generates an sPUSCH, and uses the sPUSCH to carry a HARQ-ACK message and an SR.

For another example, when the fifth uplink control channel is an sPUSCH and the sixth uplink control channel is an sPUCCH, and the fifth time length is unequal to the sixth time length, for example, one time length is two symbols, and the other time length is three symbols, the terminal device generates, based on an sPUCCH format 1, 1a, or 1b, a sixth uplink control channel for carrying a HARQ-ACK message and an SR, and sends the sixth uplink control channel on a resource for the sixth uplink control channel; or when the fifth uplink control channel is an sPUCCH and the sixth uplink control channel is an sPUSCH, and the fifth time length is unequal to the sixth time length, for example, one time length is two symbols, and the other time length is three symbols, the sPUSCH is used to carry a HARQ-ACK message and an SR.

For example, the terminal device sends the SR on the uplink control channel for carrying control information. The uplink control channel for carrying control information is the sixth uplink control channel. For example, when the fifth uplink control channel is a PUCCH and the sixth uplink control channel is an sPUSCH or an sPUCCH, and the fifth time length is unequal to the sixth time length, for example, the fifth time length is 1 ms or one subframe, and the sixth time length is two symbols, three symbols, seven symbols, or one slot, the terminal device determines that the uplink control channel for carrying control information is the sPUSCH or the sPUCCH; or when the fifth uplink control channel is an sPUSCH or an sPUCCH and the sixth uplink control channel is a PUCCH, and the fifth time length is unequal to the sixth time length, for example, the fifth time length is two symbols, three symbols, seven symbols, or one slot, and the sixth time length is 1 ms or one subframe, the terminal device determines that the uplink control channel for carrying control information is the PUCCH; or when the fifth uplink control channel is an sPUSCH and the sixth uplink control channel is an sPUCCH, and the fifth time length is unequal to the sixth time length, for example, the fifth time length is two symbols or three symbols, and the sixth time length is seven symbols or one slot, the terminal device determines that the uplink control channel for carrying control information is the sPUCCH; or when the fifth uplink control channel is an sPUCCH and the sixth uplink control channel is an sPUSCH, and the fifth time length is unequal to the sixth time length, for example, the fifth time length is two symbols or three symbols, and the sixth time length is seven symbols or one slot, the terminal device determines that the uplink control channel for carrying control information is the sPUSCH.

For example, the terminal device discards the HARQ-ACK message, where the uplink control channel for carrying control information is the sixth uplink control channel; or the terminal device discards the HARQ-ACK message, where the fifth time length is unequal to the sixth time length. For example, if to-be-sent control information includes a HARQ-ACK message and an SR, and the uplink control channel for carrying control information is the sixth uplink control channel, the terminal device discards the HARQ-ACK message, and uses the sixth uplink control channel to carry the SR; or if to-be-sent control information includes a HARQ-ACK message and an SR, and the fifth time length is unequal to the sixth time length, the terminal device discards the HARQ-ACK message, and sends only the SR.

It should be noted that the fifth uplink control channel is used to carry a HARQ-ACK message, and the sixth uplink control channel is used to carry an SR. It may be understood that the fifth uplink control channel is an uplink control channel corresponding to the HARQ-ACK message, and the sixth uplink control channel is an uplink control channel corresponding to the SR. If a HARQ-ACK message and an SR do not need to be sent in a same time period, the terminal device sends a HARQ on the fifth uplink control channel, or sends an SR on the sixth uplink control channel. If a HARQ-ACK message and an SR are to be sent in a same time period, and an optional solution in this embodiment of the present invention is met, the sixth uplink control channel carries both the SR and the HARQ-ACK message, indicated by the following: The HARQ-ACK message is sent on the sixth uplink control channel, and sending of the sixth uplink channel implicitly indicates that the terminal device sends the SR in this case. If a HARQ-ACK message and an SR are to be sent in a same time period, and an optional solution in this embodiment of the present invention is met, the fifth uplink control channel carries both the SR and the HARQ-ACK message. Therefore, the fifth uplink control channel may be used to transmit only a HARQ-ACK message, or transmit both HARQ-ACK information and an SR. The sixth uplink control channel may be used to transmit only an SR, or transmit both HARQ-ACK information and an SR.

Optionally, the fifth uplink control channel may be indicated based on downlink control information DCI, or may be determined based on a resource carrying downlink control information, or may be determined based on higher layer signaling. The sixth uplink control channel is predefined, notified by using higher layer signaling, or indicated based on downlink control information (downlink control information, DCI).

Optionally, before step 602, it may be further determined whether the following condition is met: A service priority corresponding to the HARQ-ACK message is lower than a service priority corresponding to the SR, or a latency requirement of a downlink data service corresponding to the HARQ-ACK message is lower than a latency requirement of an uplink data service corresponding to the SR. When the condition is met, step 602 is performed.

Optionally, before step 602, it is first determined whether the service priority corresponding to the SR is higher than or equal to the service priority corresponding to the HARQ-ACK message. If a determining result is yes, step 602 is performed; or if a determining result is no, step 402 is performed.

Optionally, before step 602, it is first determined whether the latency requirement of the downlink data service corresponding to the HARQ-ACK message is higher than or equal to the latency requirement of the uplink data service corresponding to the SR. If a determining result is yes, step 402 is performed; or if a determining result is no, step 602 is performed.

Optionally, before step 602, the method further includes: determining, by the terminal device, the service priority corresponding to the HARQ-ACK message; and/or determining, by the terminal device, the service priority corresponding to the SR.

Optionally, a service priority of ultra-reliable and low latency communications (ultra-reliable and low latency communications, URLLC) is higher than a service priority corresponding to enhanced mobile broadband (enhanced mobile broadband, eMBB). For example, if an SR corresponds to a URLLC service, and a HARQ-ACK message corresponds to an eMBB service, a service priority corresponding to the SR is higher than a service priority corresponding to the HARQ-ACK message.

It should be noted that the latency requirement of the downlink data service may be a time value, corresponding to the downlink data service, of successful transmission within a preset time, for example, a requirement of transmission completion within a time of 2 ms is lower than a requirement of transmission completion within a time of 1 ms; or may be transmission accuracy corresponding to the downlink data service, for example, a requirement for an error rate 10e-3 is lower than a requirement for an error rate 10e-5.

Optionally, the terminal device determines the service priority corresponding to the HARQ-ACK message or the latency requirement of the downlink data service corresponding to the HARQ-ACK message.

Optionally, the terminal device determines the service priority corresponding to the SR or a latency requirement of a downlink data service corresponding to the SR.

Optionally, before step 601, the method further includes: determining, by the terminal device, a format of the first uplink control channel; and/or determining, by the terminal device, a format of the second uplink control channel.

For example, the format of the fifth uplink control channel is 1a, 1b, or 2, or the format of the fifth uplink control channel is 1a or 1b; and/or the format of the sixth uplink control channel is 1, 1a, 1b, or 2, or the format of the sixth uplink control channel is 1, 1a, or 1b. The format of the sixth uplink control channel may be first configured as 1, and then, when both the HARQ-ACK message and the SR are to be sent, a sixth uplink control channel in a format of 1a, 1b, or 2 may be generated on a resource corresponding to the sixth uplink control channel.

Optionally, when the terminal device determines that the format of the fifth uplink control channel is 1a, 1b, or 2, the terminal device determines, based on the relationship between the fifth time length and the sixth time length, the uplink control channel for carrying control information. When the terminal device determines that the format of the fifth uplink control channel is 3, 4, or 5, the terminal device directly determines that the uplink control channel for carrying control information is the fifth uplink control channel. For example, 1a is an sPUCCH format 1a, 1b is an sPUCCH format 1b, 2 is an sPUCCH format 2, 3 is an sPUCCH format 3, 4 is an sPUCCH format 4, and 5 is an sPUCCH format 5.

Optionally, when the terminal device determines that the format of the fifth uplink control channel is la or 1b, the terminal device determines, based on the relationship between the fifth time length and the sixth time length, the uplink control channel for carrying control information. When the terminal device determines that the format of the fifth uplink control channel is 3, 4, or 5, the terminal device directly determines that the uplink control channel for carrying control information is the fifth uplink control channel. For example, 1a is a PUCCH format 1a, 1b is a PUCCH format 1b, 3 is a PUCCH format 3, 4 is a PUCCH format 4, and 5 is a PUCCH format 5.

Optionally, when the terminal device determines that the format of the fifth uplink control channel is 1, 1a, or 1b, the terminal device determines, based on the relationship between the fifth time length and the sixth time length, the uplink control channel for carrying control information. When the terminal device determines that the format of the fifth uplink control channel is 3, 4, or 5, the terminal device directly determines that the uplink control channel for carrying control information is the fifth uplink control channel. For example, 1 is an sPUCCH format 1, 1a is an sPUCCH format 1a, 1b is an sPUCCH format 1b, 3 is an sPUCCH format 3, 4 is an sPUCCH format 4, and 5 is an sPUCCH format 5.

Optionally, when the terminal device determines that the format of the fifth uplink control channel is 1, 1a, or 1b, the terminal device determines, based on the relationship between the fifth time length and the sixth time length, the uplink control channel for carrying control information. When the terminal device determines that the format of the fifth uplink control channel is 3, 4, or 5, the terminal device directly determines that the uplink control channel for carrying control information is the fifth uplink control channel. For example, 1 is a PUCCH format 1, 1a is a PUCCH format 1a, 1b is a PUCCH format 1b, 3 is a PUCCH format 3, 4 is a PUCCH format 4, and 5 is a PUCCH format 5.

Optionally, before step 601, the terminal device determines the fifth time length based on higher layer signaling sent by a network device or a time length corresponding to downlink transmission; and/or the terminal device determines the sixth time length based on higher layer signaling sent by the network device.

Optionally, the fifth time length is equal to the time length corresponding to the downlink transmission. For example, if the time length corresponding to the downlink transmission is two symbols, the fifth time length is two symbols.

Optionally, the fifth time length is preset, and/or the sixth time length is preset.

For example, the fifth uplink control channel and the sixth uplink control channel overlap in terms of time.

Optionally, when the fifth uplink control channel and the sixth uplink control channel overlap in terms of time, the terminal device determines, based on the relationship between the fifth time length and the sixth time length, the uplink control channel for carrying control information; or otherwise, the terminal device directly determines that the uplink control channel for carrying control information is the fifth uplink control channel or the sixth uplink control channel, without performing determining based on the relationship between the fifth time length and the sixth time length.

Optionally, a transmit time difference between the fifth uplink control channel and the sixth uplink control channel is less than or equal to c µs, where c is a predefined value, and c is a non-negative integer. Optionally, when the transmit time difference between the fifth uplink control channel and the sixth uplink control channel is less than or equal to c µs, the terminal device determines, based on the relationship between the fifth time length and the sixth time length, the uplink control channel for carrying control information; or otherwise, the terminal device directly determines that the uplink control channel for carrying control information is the fifth uplink control channel or the sixth uplink control channel, without performing determining based on the relationship between the fifth time length and the sixth time length. Optionally, an overlap time between the fifth uplink control channel and the sixth uplink control channel is greater than or equal to d µs, where d is a predefined value, and d is a non-negative integer. Optionally, when the overlap time between the fifth uplink control channel and the sixth uplink control channel is greater than or equal to d µs, the terminal device determines, based on the relationship between the fifth time length and the sixth time length, the uplink control channel for carrying control information; or otherwise, the terminal device directly determines that the uplink control channel for carrying control information is the fifth uplink control channel or the sixth uplink control channel, without performing determining based on the relationship between the fifth time length and the sixth time length. For example, if the format of the fifth uplink control channel is 1a, 1b, or 2, the solution in this embodiment of the present invention is executed; or if the format of the fifth uplink control channel is 3, 4, or 5, the solution in this embodiment of the present invention is not executed, and the terminal device sends the HARQ-ACK message and the SR on the fifth uplink control channel.

Optionally, the fifth uplink control channel and the sixth uplink control channel are uplink control channels on a same carrier, or the fifth uplink control channel and the sixth uplink control channel are uplink control channels on a same carrier group.

Optionally, the terminal device determines that the fifth uplink control channel and the sixth uplink control channel are uplink control channels on a same carrier or carrier group. It should be noted that if the fifth uplink control channel and the sixth uplink control channel are uplink control channels that are not on a same carrier, or the fifth uplink control channel and the sixth uplink control channel are uplink control channels that are not on a same carrier group, the terminal device may send both the fifth uplink control channel and the sixth uplink control channel, and perform neither step 601 nor step 602, because in this case, an uplink carrier characteristic is not damaged.

In this embodiment of the present invention, not only the uplink single-carrier characteristic can be maintained, but also the SR can be first transmitted. The terminal device determines, by determining the relationship between the fifth time length corresponding to the fifth uplink control channel and the sixth time length corresponding to the sixth uplink control channel, for example, determining whether the fifth time length is equal to or the same as the sixth time length, to send the uplink control channel for carrying control information. When the fifth time length is the same as the sixth time length, the terminal device selects a resource corresponding to the fifth uplink control channel to send the HARQ-ACK message and the SR; or when the fifth time length is different from the sixth time length, the terminal device selects a resource corresponding to the sixth uplink control channel to send the SR. Therefore, the terminal device is prevented from sending two channels with different TTI lengths, and the uplink single-carrier characteristic is prevented from being damaged, so that important information can be correctly transmitted while costs of the terminal device are reduced.

Step 603: The network device determines, based on the relationship between the fifth time length and the sixth time length, the uplink control channel, detected by the network device, for carrying control information.

The uplink control channel for carrying control information is at least one of a fifth uplink control channel and a sixth uplink control channel, the fifth time length is a time length corresponding to the fifth uplink control channel, the sixth time length is a time length corresponding to the sixth uplink control channel, the fifth uplink control channel is used to carry the HARQ-ACK message, and the sixth uplink control channel is used to carry the SR. Optionally, when the fifth time length is equal to the sixth time length, the network device determines that the uplink control channel, detected by the network device, for carrying control information is the fifth uplink control channel and the sixth uplink control channel. When the fifth time length is equal to the sixth time length, and to-be-transmitted information includes only a HARQ-ACK message but does not include an SR, the terminal device uses the fifth uplink control channel to carry the HARQ-ACK message; or when to-be-transmitted information includes a HARQ-ACK message and an SR, the terminal device uses the sixth uplink control channel to carry the HARQ-ACK message and the SR. To cover the foregoing two cases, when the fifth time length is equal to the sixth time length, the network device needs to detect both the fifth uplink control channel and the sixth uplink control channel.

Optionally, when the fifth time length is unequal to the sixth time length, for example, one time length is two symbols, and the other time length is three symbols, the network device determines that the uplink control channel, detected by the network device, for carrying control information is the fifth uplink control channel and the sixth uplink control channel. When the fifth time length is equal to the sixth time length, and to-be-transmitted information includes only a HARQ-ACK message but does not include an SR, the terminal device uses the fifth uplink control channel to carry the HARQ-ACK message; or when to-be-transmitted information includes a HARQ-ACK message and an SR, the terminal device uses the sixth uplink control channel to carry the HARQ-ACK message and the SR. To cover the foregoing two cases, when the fifth time length is equal to the sixth time length, the network device needs to detect both the fifth uplink control channel and the sixth uplink control channel.

Optionally, the network device determines, based on a case in which the fifth time length is less than or equal to the sixth time length, that the uplink control channel, detected by the network device, for carrying control information is the fifth uplink control channel and the sixth uplink control channel.

For example, when the fifth time length is unequal to the sixth time length, the network device determines that the uplink control channel, detected by the network device, for carrying control information is the sixth uplink control channel. The fifth time length is unequal to the sixth time length, and the terminal device uses the sixth uplink control channel to carry the SR. Therefore, the network device needs to detect only the sixth uplink control channel but does not need to detect the fifth uplink control channel.

Optionally, the network device determines, based on a case in which the fifth time length is less than or greater than the sixth time length, that the uplink control channel, detected by the network device, for carrying control information is the sixth uplink control channel.

Therefore, the network device determines that the uplink control channel, detected by the network device, for carrying control information is the sixth uplink control channel, and does not detect the fifth uplink control channel, to prevent the network device from detecting two channels with different TTI lengths, so that costs of the network device are reduced, and timely transmission of the SR can be ensured.

Step 604: The network device detects the uplink control channel for carrying control information, where the control information includes at least the SR.

Optionally, after step 604, the method includes: receiving, by the network device, the HARQ-ACK message and the SR on the uplink control channel for carrying control information, where the uplink control channel for carrying control information is the sixth uplink control channel.

Optionally, after step 604, the method includes: receiving, by the network device, the SR on the uplink control channel for carrying control information, where the uplink control channel for carrying control information is the sixth uplink control channel.

Optionally, the network device does not detect the fifth control channel. The fifth time length is unequal to the sixth time length.

Optionally, a service priority corresponding to the HARQ-ACK message is lower than a service priority corresponding to the SR, or a latency requirement of a downlink data service corresponding to the HARQ-ACK message is lower than a latency requirement of an uplink data service corresponding to the SR.

Optionally, before step 603, the method includes: determining, by the network device, the service priority corresponding to the HARQ-ACK message; and/or determining, by the network device, the service priority corresponding to the SR.

Optionally, before step 603, the method includes: determining, by the network device, a format of the fifth uplink control channel; and/or determining, by the network device, a format of the sixth uplink control channel.

Optionally, the format of the fifth uplink control channel is 1a, 1b, or 2, or the format of the fifth uplink control channel is 1a or 1b; and/or the format of the sixth uplink control channel is 1, 1a, 1b, or 2, or the format of the sixth uplink control channel is 1, 1a, or 1b.

Optionally, the network device determines the fifth time length based on higher layer signaling or a time length corresponding to downlink transmission; and/or the network device determines the sixth time length based on higher layer signaling. The network device may further indicate the fifth time length and/or the sixth time length by using physical layer DCI.

Optionally, the fifth uplink control channel and the sixth uplink control channel overlap in terms of time. If the fifth uplink control channel and the sixth uplink control channel do not overlap in terms of time, no channel selection is involved. This case is unrelated to the solution, and therefore details are not described herein.

Optionally, the fifth uplink control channel and the sixth uplink control channel are uplink control channels on a same carrier, or the fifth uplink control channel and the sixth uplink control channel are uplink control channels on a same carrier group.

Optionally, the network device determines that the fifth uplink control channel and the sixth uplink control channel are uplink control channels on a same carrier or carrier group. It should be noted that if the fifth uplink control channel and the sixth uplink control channel are uplink control channels that are not on a same carrier, or the fifth uplink control channel and the sixth uplink control channel are uplink control channels that are not on a same carrier group, the network device directly determines that the uplink control channel, detected by the network device, for carrying control information is the fifth uplink control channel and the sixth uplink control channel.

Optionally, it may be considered that a time length of two symbols is equal to a time length of three symbols.

In addition, step 601 and step 602 are performed by the terminal device, and an occasion for performing the two steps is controlled by the terminal device. Step 603 and step 604 are performed by the network device, and an occasion for performing the two steps is controlled by the network device. Therefore, a sequence of performing step 601, step 602, step 603, and step 604 is not specifically limited in this embodiment of the present invention. The terminal device may perform step 601 and step 602 before the network device performs step 603 and step 604, or the network device may perform step 603 and step 604 before the terminal device performs step 601 and step 602, or the terminal device may perform step 601 and step 602 when the network device performs step 603 and step 604.

In this embodiment of the present invention, according to the technical solutions provided in this application, the network device determines, by determining the relationship between the fifth time length corresponding to the fifth uplink control channel and the sixth time length corresponding to the sixth uplink control channel, for example, determining whether the fifth time length is equal to or the same as the sixth time length, the uplink control channel, detected by the network device, for carrying control information. When the fifth time length is the same as the sixth time length, the network device determines that the uplink control channel, detected by the network device, for carrying control information is the first uplink control channel and the second uplink control channel, and the network device needs to blindly detect the two uplink control channels, so that timely transmission of the HARQ-ACK message and the SR can be ensured. When the fifth time length is different from the sixth time length, the network device determines that the uplink control channel, detected by the network device, for carrying control information is the sixth uplink control channel, to prevent the network device from detecting two channels with different TTI lengths, so that costs of the network device are reduced.

In this embodiment of the present invention, not only an uplink single-carrier characteristic can be maintained, but also a suitable channel, detected by the network device, for carrying an SR can be selected, so that a probability of correct SR transmission is increased.

The following describes, based on two specific application scenarios, the method for sending and detecting control information provided in the embodiments of the present invention.

In a first application scenario, an uplink control channel used by the terminal device to send an SR has two different time lengths. Based on the application scenario, in a possible implementation, if within a time period, there is a scheduling request (denoted as an sPUCCH-SR) corresponding to a physical uplink control channel of a short transmission time interval or a scheduling request (denoted as a PUCCH-SR) corresponding to a physical uplink control channel, when a PUCCH format corresponding to the HARQ-ACK message is 1a or 1b, or an sPUCCH format corresponding to the HARQ-ACK message is 1, 1a, or 1b, and when a time length of an uplink control channel corresponding to the HARQ-ACK message is equal to a time length of an uplink control channel corresponding to the SR, the SR and the HARQ are transmitted on a resource of the uplink control channel corresponding to the SR.

For example, when the HARQ-ACK message is a HARQ-ACK message (denoted as sPUCCH-ACK) corresponding to a physical uplink control channel of a short transmission time interval, and the SR is an sPUCCH-SR, the sPUCCH-ACK is sent on a resource of an uplink control channel corresponding to the sPUCCH-SR.

For example, the method further includes: when a time length of an uplink control channel corresponding to the HARQ-ACK message is unequal to a time length of an uplink control channel corresponding to the SR, skipping sending the SR, and sending the HARQ-ACK message on a resource of the uplink control channel corresponding to the HARQ-ACK message.

For example, when the HARQ-ACK message is a HARQ-ACK message (denoted as PUCCH-ACK) corresponding to a physical uplink control channel of a transmission time interval, and the SR is an sPUCCH-SR, the SR is not sent, and the PUCCH-ACK is sent on a resource of an uplink control channel corresponding to the PUCCH-ACK; or when the HARQ is sPUCCH-ACK and the SR is a PUCCH-SR, the SR is not sent, and the sPUCCH-ACK is sent on a resource of an uplink control channel corresponding to the sPUCCH-ACK.

For example, the method further includes: if there is a corresponding sPUCCH-SR or PUCCH-SR within a time period, and if a PUCCH format corresponding to the HARQ is 3, 4, or 5, sending the SR on a resource of an uplink control channel corresponding to the HARQ. For example, the method further includes: selecting a resource for the SR based on a time length corresponding to last downlink scheduling.

For example, the method further includes: if there is no downlink scheduling within a time period, sending the SR on a resource for an sPUCCH-SR.

The foregoing mainly describes the solutions in the embodiments of the present invention from the perspective of interaction between network elements. It may be understood that, to implement the foregoing functions, the network elements such as the terminal device and the network device include a corresponding hardware structure and/or software module for performing each function. A person of ordinary skill in the art should easily be aware that, in combination with the examples described in the embodiments disclosed in this specification, units and algorithms steps can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

In the embodiments of the present invention, the terminal device, the network device, and the like may be divided into function modules based on the foregoing method example. For example, each function module may be obtained through division based on each function, or two or more functions may be integrated into one processing module. The integrated module may be implemented in a form of hardware, or may be implemented in a form of a software functional module. It should be noted that, in the embodiments of the present invention, module division is an example, and is merely logical function division. In actual implementation, another division manner may be used.

When an integrated module is used, FIG. 7 is a possible schematic structural diagram of the terminal device in the foregoing embodiments. A terminal device 700 includes a processing module 702 and a communications module 703. The processing module 702 is configured to control and manage an action of the terminal device. For example, the processing module 702 is configured to support the terminal device in performing the processes 401 and 402 in FIG. 4, the processes 501 and 502 in FIG. 5, and the processes 601 and 602 in FIG. 6, and/or is configured to perform another process of the technology described in this specification. The communications module 703 is configured to support communication between the terminal device and another network entity, for example, communication between the terminal device and a network device. The terminal device may further include a storage module 701, configured to store program code and data of the terminal device.

The processing module 702 may be a processor or a controller, for example, a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logical device, a transistor logical device, a hardware component, or a combination thereof. The processor or the controller may implement or execute various example logical blocks, modules, and circuits described with reference to content disclosed in the present invention. Alternatively, the processor may be a combination implementing a computing function, for example, a combination of one or more microprocessors, or a combination of a DSP and a microprocessor. The communications module 703 may be a communications interface, a transceiver, a transceiver circuit, or the like. The communications interface is a general term, and may include one or more interfaces. The storage module 701 may be a memory.

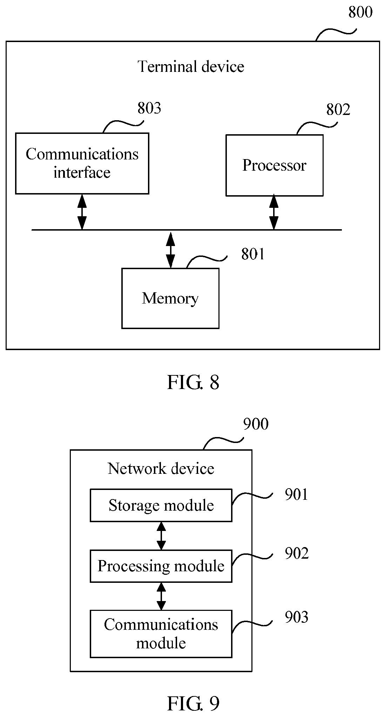

When the processing module 702 is a processor, the communications module 703 is a communications interface, and the storage module 701 is a memory, the terminal device in this embodiment of the present invention may be a terminal device shown in FIG. 8.

As shown in FIG. 8, the terminal device 800 includes a processor 802, a communications interface 803, and a memory 801. The communications interface 803, the processor 802, and the memory 801 may be communicatively connected to each other.

When an integrated module is used, FIG. 9 is a possible schematic structural diagram of the network device in the foregoing embodiments. A network device 900 includes a processing module 902 and a communications module 903. The processing module 902 is configured to control and manage an action of the network device. For example, the processing module 902 is configured to support the network device in performing the processes 403 and 404 in FIG. 4, the processes 503 and 504 in FIG. 5, and the processes 603 and 604 in FIG. 6, and/or is configured to perform another process of the technology described in this specification. The communications module 903 is configured to support communication between the network device and another network entity, for example, communication between the network device and a terminal device. The network device may further include a storage module 901, configured to store program code and data of the network device.

The processing module 902 may be a processor or a controller, for example, a central processing unit (central processing Unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logical device, a transistor logical device, a hardware component, or a combination thereof. The processor or the controller may implement or execute various example logical blocks, modules, and circuits described with reference to content disclosed in the present invention. Alternatively, the processor may be a combination implementing a computing function, for example, a combination of one or more microprocessors, or a combination of a DSP and a microprocessor. The communications module 903 may be a communications interface, a transceiver, a transceiver circuit, or the like. The communications interface is a general term, and may include one or more interfaces. The storage module 901 may be a memory.

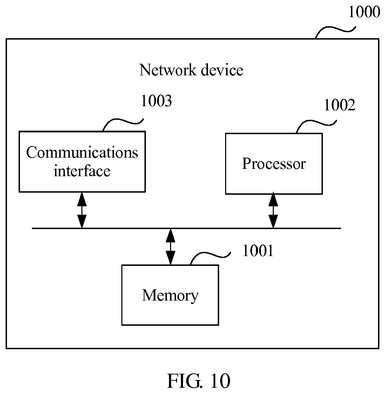

When the processing module 902 is a processor, the communications module 903 is a communications interface, and the storage module 901 is a memory, the network device in this embodiment of the present invention may be a network device shown in FIG. 10.

As shown in FIG. 10, the network device 1000 includes a processor 1002, a communications interface 1003, and a memory 1001. The communications interface 1003, the processor 1002, and the memory 1001 may be communicatively connected to each other.

Method or algorithm steps described in combination with the content disclosed in the present invention may be implemented by hardware, or may be implemented by a processor by executing a software instruction. The software instruction may include a corresponding software module. The software module may be stored in a random access memory (random access memory, RAM), a flash memory, a read-only memory (read only memory, ROM), an erasable programmable read only memory (erasable programmable ROM, EPROM), an electrically erasable programmable read only memory (electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an ASIC. In addition, the ASIC may be located in a core network interface device. Certainly, the processor and the storage medium may exist in the core network interface device as discrete components.

A person skilled in the art should be aware that in the foregoing one or more examples, functions described in the present invention may be implemented by hardware, software, firmware, or any combination thereof. When the functions are implemented by software, the functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general-purpose or dedicated computer.

The objectives, technical solutions, and benefits of the present invention are further described in detail in the foregoing specific implementations. It should be understood that the foregoing descriptions are merely specific implementations of the present invention, but are not intended to limit the protection scope of the present invention.

## Claims

1. A method for sending control information, wherein the method comprises:
determining, by a terminal device based on a relationship between a first time length and a second time length, an uplink control channel for carrying control information, wherein the uplink control channel for carrying control information is a first uplink control channel or a second uplink control channel, the first time length is a time unit including one or more symbols corresponding to the first uplink control channel, the second time length is a time unit including one or more symbols corresponding to the second uplink control channel, the first uplink control channel is used to carry a hybrid automatic repeat request-acknowledgement, HARQ-ACK, message, and the second uplink control channel is used to carry a scheduling request, SR; and
sending, by the terminal device, at least the HARQ-ACK message on the first or second uplink control channel for carrying control information,
wherein the determining, by a terminal device based on a relationship between a first time length and a second time length, an uplink control channel for carrying control information comprises:
when the first time length is equal to the second time length, determining, by the terminal device, that the uplink control channel for carrying control information is the second uplink control channel, or
when the first time length is unequal to the second time length, determining, by the terminal device, that the uplink control channel for carrying control information is the first uplink control channel.

2. The method according to claim 1, wherein the sending, by the terminal device, at least the HARQ-ACK message on the first or second uplink control channel for carrying control information comprises:
sending, by the terminal device, the HARQ-ACK message and the SR on the uplink control channel for carrying control information, wherein the uplink control channel for carrying control information is the second uplink control channel.

3. The method according to claim 1, wherein the sending, by the terminal device, at least the HARQ-ACK message on the first or second uplink control channel for carrying control information comprises:
sending, by the terminal device, the HARQ-ACK message on the uplink control channel for carrying control information, wherein the uplink control channel for carrying control information is the first uplink control channel.

4. The method according to claim 1 or 3, wherein the sending, by the terminal device, at least the HARQ-ACK message on the first or second uplink control channel for carrying control information comprises:
discarding, by the terminal device, the SR, wherein the uplink control channel for carrying control information is the first uplink control channel; or
discarding, by the terminal device, the SR, wherein the first time length is unequal to the second time length.

5. The method according to any one of claims 1, 3 and 4, wherein a service priority corresponding to the HARQ-ACK message is higher than or equal to a service priority corresponding to the SR, or a latency requirement of a downlink data service corresponding to the HARQ-ACK message is higher than or equal to a latency requirement of an uplink data service corresponding to the SR.

6. The method according to any one of claims 1 to 5, before the determining, by a terminal device, an uplink control channel for carrying control information, further comprising:
determining, by the terminal device, a format of the first uplink control channel; and/or
determining, by the terminal device, a format of the second uplink control channel.

7. The method according to any one of claims 1 to 6, wherein the format of the first uplink control channel is 1a, 1b, or 2, or the format of the first uplink control channel is 1a or 1b; and/or
the format of the second uplink control channel is 1, 1a, 1b, or 2, or the format of the second uplink control channel is 1, 1a, or 1b.

8. The method according to any one of claims 1 to 7, wherein the terminal device determines the first time length based on higher layer signaling or a time length corresponding to downlink transmission; and/or the terminal device determines the second time length based on higher layer signaling.

9. The method according to any one of claims 1 to 8, wherein the first uplink control channel and the second uplink control channel overlap in terms of time.

10. A communication apparatus, wherein the apparatus comprises means to perform the method of any one of claims 1 to 9.

11. A computer-readable storage medium storing a program, wherein the program comprises an instruction, and when the instruction is executed by a terminal device, the terminal device performs the method according to any one of claims 1 to 9.

## Patentansprüche

1. Verfahren zum Senden von Steuerinformationen, wobei das Verfahren Folgendes umfasst:
Bestimmen, durch eine Endvorrichtung basierend auf einer Beziehung zwischen einer ersten Zeitlänge und einer zweiten Zeitlänge, eines Uplink-Steuerkanals zum Führen von Steuerinformationen, wobei der Uplink-Steuerkanal zum Führen von Steuerinformationen ein erster Uplink-Steuerkanal oder ein zweiter Uplink-Steuerkanal ist, wobei die erste Zeitlänge eine Zeiteinheit ist, die ein oder mehrere Symbole beinhaltet, die dem ersten Uplink-Steuerkanal entsprechen, wobei die zweite Zeitlänge eine Zeiteinheit ist, die ein oder mehrere Symbole beinhaltet, die dem zweiten Uplink-Steuerkanal entsprechen, wobei der erste Uplink-Steuerkanal verwendet wird, um eine hybride automatische Wiederholungsanforderungsbestätigungsnachricht (*hybrid automatic repeat request-acknowledgement* - HARQ-ACK-Nachricht) zu tragen, und wobei der zweite Uplink-Steuerkanal verwendet wird, um eine Planungsanforderung (*scheduling request-* SR) zu führen; und
Senden, durch die Endvorrichtung, wenigstens der HARQ-ACK-Nachricht auf dem ersten oder zweiten Uplink-Steuerkanal zum Führen von Steuerinformationen, wobei das Bestimmen durch eine Endvorrichtung, basierend auf einer Beziehung zwischen einer ersten Zeitlänge und einer zweiten Zeitlänge, eines Uplink-Steuerkanals zum Führen von Steuerinformationen umfasst:
wenn die erste Zeitlänge gleich der zweiten Zeitlänge ist, Bestimmen, durch die Endvorrichtung, dass der Uplink-Steuerkanal zum Führen von Steuerinformationen der zweite Uplink-Steuerkanal ist, oder wenn die erste Zeitlänge ungleich der zweiten Zeitlänge ist, Bestimmen durch die Endvorrichtung, dass der Uplink-Steuerkanal zum Führen von Steuerinformationen der erste Uplink-Steuerkanal ist.

2. Verfahren nach Anspruch 1, wobei das Senden, durch die Endvorrichtung, wenigstens der HARQ-ACK-Nachricht auf dem ersten oder zweiten Uplink-Steuerkanal zum Führen von Steuerinformationen umfasst:
Senden, durch die Endvorrichtung, der HARQ-ACK-Nachricht und der SR auf dem Uplink-Steuerkanal zum Führen von Steuerinformationen, wobei der Uplink-Steuerkanal zum Führen von Steuerinformationen der zweite Uplink-Steuerkanal ist.

3. Verfahren nach Anspruch 1, wobei das Senden, durch die Endvorrichtung, wenigstens der HARQ-ACK-Nachricht auf dem ersten oder zweiten Uplink-Steuerkanal zum Führen von Steuerinformationen umfasst:
Senden, durch die Endvorrichtung, der HARQ-ACK-Nachricht auf dem Uplink-Steuerkanal zum Führen von Steuerinformationen, wobei der Uplink-Steuerkanal zum Führen von Steuerinformationen der erste Uplink-Steuerkanal ist.

4. Verfahren nach Anspruch 1 oder 3, wobei das Senden, durch die Endvorrichtung, wenigstens der HARQ-ACK-Nachricht auf dem ersten oder zweiten Uplink-Steuerkanal zum Führen von Steuerinformationen umfasst:
Verwerfen, durch die Endvorrichtung, der SR, wobei der Uplink-Steuerkanal zum Führen von Steuerinformationen der erste Uplink-Steuerkanal ist; oder
Verwerfen, durch die Endvorrichtung, der SR, wobei die erste Zeitlänge ungleich der zweiten Zeitlänge ist.

5. Verfahren nach einem der Ansprüche 1, 3 und 4, wobei eine Dienstpriorität, die der HARQ-ACK-Nachricht entspricht, höher oder gleich einer Dienstpriorität ist, die der SR entspricht, oder wobei eine Latenzanforderung eines Downlink-Datendienstes, der der HARQ-ACK-Nachricht entspricht, höher oder gleich einer Latenzanforderung eines Uplink-Datendienstes, der dem SR entspricht, ist.

6. Verfahren nach einem der Ansprüche 1 bis 5, vor dem Bestimmen, durch eine Endvorrichtung, eines Uplink-Steuerkanals zum Führen von Steuerinformationen, ferner umfassend:
Bestimmen, durch die Endvorrichtung, eines Formats des ersten Uplink-Steuerkanals; und/oder
Bestimmen, durch die Endvorrichtung, eines Formats des zweiten Uplink-Steuerkanals.

7. Verfahren nach einem der Ansprüche 1 bis 6, wobei das Format des ersten Uplink-Steuerkanals 1a, 1b oder 2 ist oder das Format des ersten Uplink-Steuerkanals 1a oder 1b ist; und/oder
das Format des zweiten Uplink-Steuerkanals 1, 1a, 1b oder 2 ist, oder das Format des zweiten Uplink-Steuerkanals 1, 1a oder 1b ist.

8. Verfahren nach einem der Ansprüche 1 bis 7, wobei die Endvorrichtung die erste Zeitlänge basierend auf einer Signalisierung höherer Schichten oder einer Zeitlänge bestimmt, die einer Downlink-Übertragung entspricht; und/oder
die Endvorrichtung die zweite Zeitlänge basierend auf der Signalisierung einer höheren Schicht bestimmt.

9. Verfahren nach einem der Ansprüche 1 bis 8, wobei der erste Uplink-Steuerkanal und der zweite Uplink-Steuerkanal zeitlich überlappen.

10. Kommunikationseinrichtung, wobei die Einrichtung Mittel umfasst, um das Verfahren nach einem der Ansprüche 1 bis 9 auszuführen.

11. Computerlesbares Speichermedium, das ein Programm speichert, wobei das Programm einen Befehl umfasst, und wenn der Befehl von einer Endvorrichtung ausgeführt wird, die Endvorrichtung das Verfahren nach einem der Ansprüche 1 bis 9 ausführt.

## Revendications

1. Procédé d'envoi d'informations de contrôle, dans lequel le procédé comprend :
la détermination, par un dispositif terminal sur la base d'une relation entre une première durée et une seconde durée, d'un canal de contrôle de liaison montante pour transporter des informations de contrôle, dans lequel le canal de contrôle de liaison montante pour transporter des informations de contrôle est un premier canal de contrôle de liaison montante ou un second canal de contrôle de liaison montante, la première durée est une unité de temps comportant un ou plusieurs symboles correspondant au premier canal de contrôle de liaison montante, la seconde durée est une unité de temps comportant un ou plusieurs symboles correspondant au second canal de contrôle de liaison montante, le premier canal de contrôle de liaison montante est utilisé pour transporter un message d'accusé de réception de requête automatique de répétition hybride, HARQ-ACK, et le second canal de contrôle de liaison montante est utilisé pour transporter une demande de programmation, SR ; et
l'envoi, par le dispositif terminal, d'au moins le message HARQ-ACK sur le premier ou le second canal de contrôle de liaison montante pour transporter des informations de contrôle,
dans lequel la détermination, par un dispositif terminal, sur la base d'une relation entre une première durée et une seconde durée, d'un canal de contrôle de liaison montante pour transporter des informations de contrôle comprend :
lorsque la première durée est égale à la seconde durée, la détermination, par le dispositif terminal, que le canal de contrôle de liaison montante pour transporter des informations de contrôle est le second canal de contrôle de liaison montante, ou
lorsque la première durée est différente de la seconde durée, la détermination, par le dispositif terminal, que le canal de contrôle de liaison montante pour transporter des informations de contrôle est le premier canal de contrôle de liaison montante.

2. Procédé selon la revendication 1, dans lequel l'envoi, par le dispositif terminal, d'au moins le message HARQ-ACK sur le premier ou le second canal de contrôle de liaison montante pour transporter des informations de contrôle comprend :
l'envoi, par le dispositif terminal, du message HARQ-ACK et de la SR sur le canal de contrôle de liaison montante pour transporter des informations de contrôle, dans lequel le canal de contrôle de liaison montante pour transporter des informations de contrôle est le second canal de contrôle de liaison montante.

3. Procédé selon la revendication 1, dans lequel l'envoi, par le dispositif terminal, d'au moins le message HARQ-ACK sur le premier ou le second canal de contrôle de liaison montante pour transporter des informations de contrôle comprend :
l'envoi, par le dispositif terminal, du message HARQ-ACK sur le canal de contrôle de liaison montante pour transporter des informations de contrôle, dans lequel le canal de contrôle de liaison montante pour transporter des informations de contrôle est le premier canal de contrôle de liaison montante.

4. Procédé selon la revendication 1 ou 3, dans lequel l'envoi, par le dispositif terminal, d'au moins le message HARQ-ACK sur le premier ou le second canal de contrôle de liaison montante pour transporter des informations de contrôle comprend :
la suppression, par le dispositif terminal, de la SR, dans lequel le canal de contrôle de liaison montante pour transporter des informations de contrôle est le premier canal de contrôle de liaison montante ; ou
la suppression, par le dispositif terminal, de la SR, dans lequel la première durée est différente de la seconde durée.

5. Procédé selon l'une quelconque des revendications 1, 3 et 4, dans lequel une priorité de service correspondant au message HARQ-ACK est supérieure ou égale à une priorité de service correspondant à la SR, ou une exigence de latence d'un service de données de liaison descendante correspondant au message HARQ-ACK est supérieure ou égale à une exigence de latence d'un service de données de liaison montante correspondant à la SR.

6. Procédé selon l'une quelconque des revendications 1 à 5, avant la détermination, par un dispositif terminal, d'un canal de contrôle de liaison montante pour transporter des informations de contrôle, comprenant en outre :
la détermination, par le dispositif terminal, d'un format du premier canal de contrôle de liaison montante ; et/ou
la détermination, par le dispositif terminal, d'un format du second canal de contrôle de liaison montante.

7. Procédé selon l'une quelconque des revendications 1 à 6, dans lequel le format du premier canal de contrôle de liaison montante est 1a, 1b ou 2, ou le format du premier canal de contrôle de liaison montante est 1a ou 1b ; et/ou
le format du second canal de contrôle de liaison montante est 1, 1a, 1b ou 2, ou le format du second canal de contrôle de liaison montante est 1, 1a ou 1b.

8. Procédé selon l'une quelconque des revendications 1 à 7, dans lequel le dispositif terminal détermine la première durée sur la base d'une signalisation de couche supérieure ou d'une durée correspondant à une transmission de liaison descendante ; et/ou le dispositif terminal détermine la seconde durée sur la base d'une signalisation de couche supérieure.

9. Procédé selon l'une quelconque des revendications 1 à 8, dans lequel le premier canal de contrôle de liaison montante et le second canal de contrôle de liaison montante se chevauchent en termes de temps.

10. Appareil de communication, dans lequel l'appareil comprend un moyen pour effectuer le procédé selon l'une quelconque des revendications 1 à 9.

11. Support de stockage lisible par ordinateur stockant un programme, dans lequel le programme comprend une instruction, et lorsque l'instruction est exécutée par un dispositif terminal, le dispositif terminal effectue le procédé selon l'une quelconque des revendications 1 à 9.
